# EUROPEAN PATENT SPECIFICATION

(11) **EP 4 360 030 B1**
(45) Date of publication and mention of the grant of the patent: **09.12.2026**
(21) Application number: 22829404.7
(22) Date of filing: 24.06.2022
(51) Int. Cl.: G06Q 20/20, G06Q 20/40, G06Q 20/38

(54) **AUTHORIZATION REQUEST AND MANAGEMENT**
BERECHTIGUNGSANFRAGE UND -VERWALTUNG
DEMANDE ET GESTION D'AUTORISATION

(30) Priority: 25.06.2021 US 202163215112 P; 28.04.2022 US 202263335741 P
(43) Date of publication of application: 01.05.2024
(73) Proprietor: K-Dimensional Holdings, Inc., New York, NY 10012 (US)
(72) Inventor: SIMON, Daniel, New York, NY 10012 (US); BROSGOL, Philipp, New York, NY 10012 (US); WEINBERG, Jordan, Scott, New York, NY 10012 (US)
(74) Representative: J A Kemp LLP
(86) International application number: PCT/US2022/034939
(87) International publication number: WO 2022/272087

(56) References cited:
- WO-A2-2020/098845
- US-A- 5 578 808
- US-A1- 2005 187 870
- US-A1- 2015 100 418
- US-A1- 2020 218 283
- US-A1- 2020 402 044
- US-A1- 2020 410 131

## Description

### TECHNICAL FIELD

The subject matter described herein relates to requesting authorization in regard to an asset.

### BACKGROUND

Asset authorization can be an important step when requesting use of a resource required to perform a task in regard to an asset. For example, in the operation and management of vehicle fleets, a payment instrument, such as a credit card, can be required, as a form of payment, when a driver refuels a vehicle in the fleet. It can be advantageous to authorize use of a specific payment instrument, such as a credit card, to a specific driver and a specific vehicle in order to prevent fraud, reduce or eliminate resource (e.g., financial) waste and asset (e.g., vehicle) abuse, and more closely manage human behavior in regard to use of limited resources and assets.

US patent application US2020/402044 A1 is further prior art.

### SUMMARY

The invention is defined by the appended claims.

In one aspect, a method is provided. In an embodiment, the method can include receiving data characterizing a request for authorization, the request including a first identifier identifying a payment instrument. The method can also include obtaining a second identifier associated with a user of the payment instrument and a third identifier identifying a physical asset. The method can further include determining an association between at least two of the first identifier, the second identifier, or the third identifier. The method can also include determining, based on a rule and the association, to approve the request for authorization. The method can further include transmitting data to approve the request for authorization.

In another embodiment, the method can include associating the user with the physical asset and/or with a payment instrument, wherein the association relates the first identifier identifying the user with the second identifier identifying the payment instrument and/or the third identifier identifying the physical asset in regard to the request for authorization. The method can also include storing the association. In another embodiment, determining to approve the request for authorization can be performed based on one or more policies, each policy can include one or more rules. In another embodiment, the one or more rules can be evaluated based on information obtained from a third party.

In another embodiment, the approved request for authorization can be supplemented with additional data received after transmitting the data to approve the request for authorization. In another embodiment, data can be received from and transmitted to an open loop payment network or a closed loop payment network.

In another embodiment, the method can include receiving data characterizing a second request and determining to decline the second request. In another embodiment, the physical asset can be a vehicle. In another embodiment, the authorization can be for fueling the vehicle. In another embodiment, the data characterizing the request can include pre-authorization request data received subsequent to a determination to decline the request for authorization.

Non-transitory computer program products (i.e., physically embodied computer program products) are also described that store instructions, which when executed by one or more data processors of one or more computing systems, causes at least one data processor to perform operations herein. Similarly, computer systems are also described that may include one or more data processors and memory coupled to the one or more data processors. The memory may temporarily or permanently store instructions that cause at least one processor to perform one or more of the operations described herein. In addition, methods can be implemented by one or more data processors either within a single computing system or distributed among two or more computing systems. Such computing systems can be connected and can exchange data and/or commands or other instructions or the like via one or more connections, including a connection over a network (e.g. the Internet, a wireless wide area network, a local area network, a wide area network, a wired network, or the like), via a direct connection between one or more of the multiple computing systems, etc.

The details of one or more variations of the subject matter described herein are set forth in the accompanying drawings and the description below. Other features and advantages of the subject matter described herein will be apparent from the description and drawings, and from the claims.

### DESCRIPTION OF DRAWINGS

FIGS. 1A and 1B are images illustrating exemplary embodiments of authorized associations according to subject matter described herein;
FIG. 2 is a diagram illustrating an exemplary embodiment of a data architecture of an authorization request and management system according to subject matter described herein;
FIG. 3 is a diagram illustrating an exemplary embodiment of a data flow using the data architecture of FIG. 2 according to subject matter described herein;
FIG. 4 is an image illustrating exemplary embodiments of user interfaces configured within the authorization request and management system according to subject matter described herein;
FIG. 5 is an image illustrating an exemplary embodiment of a card assignment interface configured within the authorization request and management system according to subject matter described herein;
FIG. 6 is an image illustrating an exemplary embodiment of a vehicle assignment interface of the authorization request and management system according to subject matter described herein;
FIG. 7 is an image illustrating an exemplary embodiment of an employee assignment interface of the authorization request and management system according to subject matter described herein;
FIG. 8 is an image illustrating an exemplary embodiment of a user interface of the authorization request and management system according to subject matter described herein;
FIG. 9 is an image illustrating an exemplary embodiment of a card for use with the authorization request and management system according to subject matter described herein;
FIG. 10 is a process flow diagram for approving an authorization request according to subject matter described herein;
FIG. 11 is a block diagram of an exemplary computing system configured to implement the data architecture of FIG. 2 according to subject matter described herein;
FIG. 12 is a data flow diagram of an exemplary embodiment of data transmitted and received by the data architecture of FIG. 2 according to subject matter described herein; and
FIG. 13-28 illustrates an interface of an example administrative portal that allows a user to manage and inspect information related to an account according to some exemplary embodiments.

Like reference symbols in the various drawings indicate like elements.

### DETAILED DESCRIPTION

When managing expenses in regard to an asset (such as a vehicle; lawnmower; other machinery or tool used to conduct business; tangible property; any operating asset consuming purchasable and perishable resources or services; and the like) companies can provide employees with a payment instrument, such as a credit card, that they can use for expenses. For instance, companies may give employees a general-purpose corporate credit card from a major bank or financial institution to pay for corporate expenses or asset usage. Companies that operate vehicle fleets have a similar need to manage and authorize employee expenses for assets, such as vehicle refueling or other vehicle-related expenses. Abuse or unauthorized spending using company resources can include purchasing un-approved items at the gas station convenience store, and using the card to buy gas for personal use or for personal sale.

To address such abuse, existing authorization systems can include proprietary closed-loop networks that can provide additional data so that unauthorized transactions outside of company policy can be declined. Existing authorization systems can also operate over open-loop networks that can provide information and alerts after a policy violation has occurred. However, existing authorization systems are unable to handle authorization approval processes associated with more complex conditional policies, such as those involving dynamically determined exception based authorization approvals. In addition, data entry for authorization approval can be cumbersome for users, such as vehicle operators. For example, in the case of a refueling a vehicle using a company vehicle payment instrument, such as a credit card, an employee (e.g., the driver) may be required to respond to prompts presented by an automated fuel dispenser (AFD) and provide a vehicle ID, an employee ID, a personal identification number (PIN), an odometer reading of the vehicle, or the like. The driver may need to gather the information from multiple locations before entering the required information into the AFD. This data collection process is very inconvenient for the employee or driver and can be prone to data entry error.

Some existing authorization systems are further limited because controls can only be applied at the level of a particular payment instrument, such as a credit card. Typically, the card must be associated to either an asset or to an employee by a manager in the authorization system software prior to the employee's use of the card. For cards tied to vehicles (e.g., "vehicle cards"), the card can be assigned to a vehicle in a management system and all drivers can be assigned a PIN. At the time of an expense such as a fuel purchase, the driver can enter their PIN so that they are identified as the purchaser. The driver does not have the flexibility to use the card to purchase fuel for another vehicle because the existing vehicle-card association is permanent (e.g., the vehicle name can be printed on a physical card). A new card must be configured and printed for the other vehicle, which can add at least several days or more of delay before the updated card can be used.

For cards tied to people or employees, (e.g., "employee cards"), the card can be assigned to a driver in the management system. When the driver purchases fuel, in addition to authenticating at the AFD by entering their PIN, they can be required to enter the vehicle ID so that the vehicle can be identified. The driver can use the card with different vehicles, but this card is permanently tied to a single driver (e.g., often the name of the driver or other is printed on the physical card). If they lose their card, a new one has to be configured and printed just for that individual.

More generally, corporate payment instruments, such as credit cards, are not configured to provide robust conditional spend controls and cost attribution to both individuals and corporate assets. As a result, existing authorization systems have not included more complex features for multi-dimensional associative management of individuals, resources and assets. Instead, existing authorization systems rely on separate cost tracking workflows and pre-approval workflows with limited policy enforcement, which do not capture data in real time. These existing authorization systems are further limited in their ability to generate real-time cost tracking for assets since their data is limited only to the card used to make the purchase.

Some implementations of the authorization request and management system described herein can enable association of a transaction on a corporate credit card payment platform with a particular employee and/or a particular corporate asset, such as a vehicle that the employee is refueling. Some implementations of the authorization request and management system described herein can provide the employee, via SMS text messaging, a mobile app, a QR code, or the like, with input prompts to receive the employee's authorization credentials for using the particular card. The input prompts can also receive data from the employee that identifies the corporate asset, such as the vehicle, prior to performing the refueling transaction.

At the time of the transaction, some implementations of the authorization request and management system described herein can use this input data to determine whether or not to approve the transaction based on policies set by the company for the employee and/or for the asset. In some embodiments, the authorization request and management system described herein can alert or flag the transaction to a different corporate resource, such as the owner or a manager. Some implementations of the authorization request and management system described herein can create, administer, and monitor expense and authorization policies for an employee and for a corporate asset, such as a vehicle, regardless of which specific cards are used by employees for corporate purposes. The policies can be dynamically modified and redistributed at any time. Some implementations of the authorization request and management system described herein can identify and apply a particular policy or an exemption to a particular policy in real-time or near-real-time as a transaction is being processed using the associative context identifying which employee and which asset is associated with the card for each transaction. If nobody is associated with or signed into a card, it will be automatically declined when used in a purchase. This approach can increase security and fidelity of data for the employer.

The authorization and request management system described herein can utilize associative relationships that can be defined in the system between users or employees, financial resources or payment instruments, such as a credit cards, and/or physical assets, such as vehicles, to dynamically apply expense or spending polices in regard to any one of the user, the credit card, or the vehicle on an transaction-by-transaction basis if needed. The unique relational dyads and/or triads of identifiers that can be formed and are associated with users, credit cards, and assets can also provide more detailed control and monitoring of user activity, credit card usage, and/or expenses that may be related to an asset. As a result, a more precise management and accounting of employee behavior, transaction activity and asset usage can be performed using the authorization and request management system described herein as compared to existing systems, which may only apply a spending limit to a credit card, or may rely on trust and behavior of the employee to conduct transactions that will not violate company transaction policies related to an asset. Asset owners, for example vehicle fleet operators, can thereby reduce fleet operating expenses, fraudulent vehicle or credit card usage by nefarious employees or other bad actors, while also providing case-by-case authorization for transactions which may be required but are outside of an expense policy for a particular employee, credit card, or asset.

After the authorization request and management system has approved or declined an authorization request, the association between a card, an employee, and a corporate asset can remain in the database and can be subsequently used to re-evaluate policies after they are modified or redistributed. These subsequent re-evaluations can be used to generate policy exceptions, which can be displayed to fleet owners or managers in an administrative portal to alert them of problems such as fraud, abuse, or inefficient behavior in regard to the use of the car with respect to one or more policies. In some embodiments, the association between card, employee, and corporate asset can be used to further generate business reports and actionable insights, by attributing historical behavior and spending activity to a particular employee or corporate asset at an earlier point in time, and thus allowing the discovery of trends or behavioral outliers. For example, when different drivers operate and purchase fuel for the same vehicle, a historical average miles per gallon (MPG) can be calculated for each driver of the vehicle and their relative driving efficiency can be reported to the fleet manager.

Although the example authorization request and management system described herein is provided in the context of fleet vehicle management and refueling expenses, the current subject matter can be applied to other assets that can be associated with individuals or entities and resources, such as a commodity, currency, or financial unit of spend. Assets can include any operating asset consuming purchasable and/or perishable resources or services. For example, some implementations of the authorization request and management system described herein can be used in relation to charging stations for electric vehicles, construction equipment or other machinery, real estate, or any other asset that requires expenditures to be tracked.

Some implementations of the authorization request and management system described herein utilize a database to enter employees and assets for use in associating each or both to a transaction. Each employee and each asset is given a unique ID. In many examples, the asset will be a vehicle. In some embodiments, for employees, the unique ID can be their mobile phone number, and for vehicles the unique ID can be the license plate or a vehicle identification number (VIN). In some embodiments, the vehicle ID can be user-defined. Each physical credit card can also have a unique ID (e.g., a "cardID") that can be assigned at the time the card is printed. The cardID can be imported in batch or individually into the example authorization request and management system described herein. The cardID can identify one or more policy attributes that can be associated with the card. For example, a cardID can identify whether or not the card can be used for authorization requests that may be exceptions to one or more policies associated with the card. In some embodiments, the exception may include a pre-authorization that requires approval before a subsequent authorization. Such authorization exceptions can be requested and approved in response to a previously declined authorization request or as an initial authorization request.

To create the card-employee-vehicle association, the employee can send an SMS message including the cardID to a phone number associated with the authorization request and management system described herein. In some embodiments, the employee can use a mobile device, such as a mobile phone to scan a QR code that is associated with the cardID. The authorization request and management system can confirm the employee's identity via their phone number, and can confirm they are a registered user and which customer account (or "fleet", for example) they are associated with or belong to. The authorization request and management system described herein can compare the cardID sent by the employee with cardlDs associated with the employee's fleet, and if a match exists, can associate the employee with the card. This is enabled via a database of the authorization request and management system described herein, which can create a "cardAssignment" object. The cardAssignment object can record the association of the employee and the card, as well as a timestamp. In this way, the association at any historical point in time can be known, even if the association changes in the future. In some embodiments, the cardID information can be entered manually into the application configured on the mobile device of the employee.

After signing into or associating to a card, the employee can then be prompted to sign into a vehicle. The employee can provide the authorization request and management system described herein with a vehiclelD, such as the vehicle license plate number The authorization request and management system can verify the employee identity and the fleet association, and can compare the vehiclelD to a list of vehiclelDs belonging to the fleet. If a match is found, the authorization request and management system can sign in or associate the employee with the vehicle via a cardAssignment object.

When the employee uses a payment instrument, such as a credit card, at an AFD, a credit card processor associated with the authorization request and management system described here can provide an authorization request to approve or decline the transaction. The authorization request can include a token representing the credit card. The token can be used by the credit card processor to identify the card in lieu of sending the 16-digit primary account number (PAN), which would require compliance with payment card industry data security standard (PCI DSS) rules with respect to cardholder data. The authorization request and management system described herein can look up the token in the database and can identify which cardID belongs to the current transaction being performed.

The authorization request and management system described herein can look up the cardAssignment matching the cardID and the transaction timestamp. The authorization request and management system can determine which employee and which vehicle are associated with the card at the time of the transaction, and this context can be saved with the transaction in a database of the authorization request and management system. The system can then use the information to look up additional context needed to authorize or decline the transaction, such as available credit for the fleet, or applicable spending restrictions which could cause the transaction to be declined.

The authorization request and management system described herein can advantageously improve signing into or associating a person with a card, such that physical cards can be fungible. Some existing solutions require cards to be assigned to individuals or vehicles or departments at the time they are printed, and for driver PINs to be manually assigned by a fleet manager. The flexibility provided by the authorization request and management system described herein means that users can have several spare cards printed and sitting in an easily accessible location (e.g., a drawer or glovebox), ready to be used at a moment's notice when an in-use card is lost or broken. Existing authorization solutions would require a delay of several days for replacement cards to be ordered, printed and shipped, and for additional coordination between the fleet manager and the employee to make sure they understand which PIN to use for the newly assigned replacement card.

The example authorization request and management system described herein can provide additional benefits of a SMS-driven, mobile-application-driven or a QR-code driven workflow compared to existing solutions, which rely on prompts delivered by and collected by the AFD via keypad to verify driver identity and vehicle data, such as odometer readings. The example authorization request and management system can make driver authentication, vehicle association, and odometer collection asynchronous to a transaction. Thus the user experience is improved since the driver does not need to authenticate every time they use a card and the driver can send the vehicle odometer data from within the vehicle without having to remember a long number that can be forgotten or incorrectly input at the AFD terminal.

The authorization request and management system described herein can apply policies to a person or to a vehicle as well as to the card. As a result, spend controls enforced by the policies are tied to and follow the actions of the person or asset that is central to a transaction instead of being tied to a card. The example authorization request and management system described herein can allow employees to use any payment instrument, such as a credit card, they want, since it is merely a method of payment rather than a method of spend control.

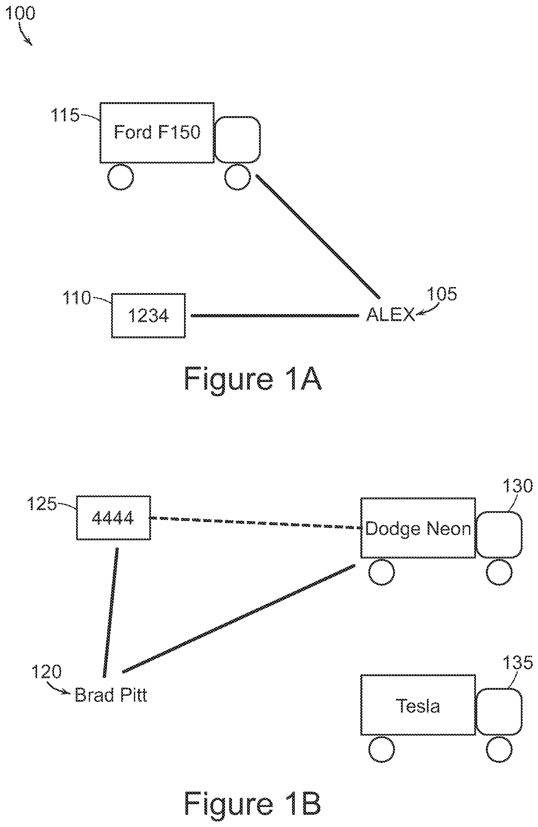

FIGS. 1A and 1B are images illustrating exemplary embodiments of authorized associations according to subject matter described herein. As shown in FIG. 1A, a user 105 can be associated with a card 110 and with a vehicle 115. As shown in FIG. 1B, a user 120 can be associated with a card 125 and with a vehicle 130. In some embodiments, the card 125 can be associated with or locked to the vehicle 130 as shown by the dotted line. By locking the card to the vehicle, a separate association can be made in the database so that only that specific card can be used in regard to that particular vehicle. The vehicle 135 is not associated with the user 120 or the card 125.

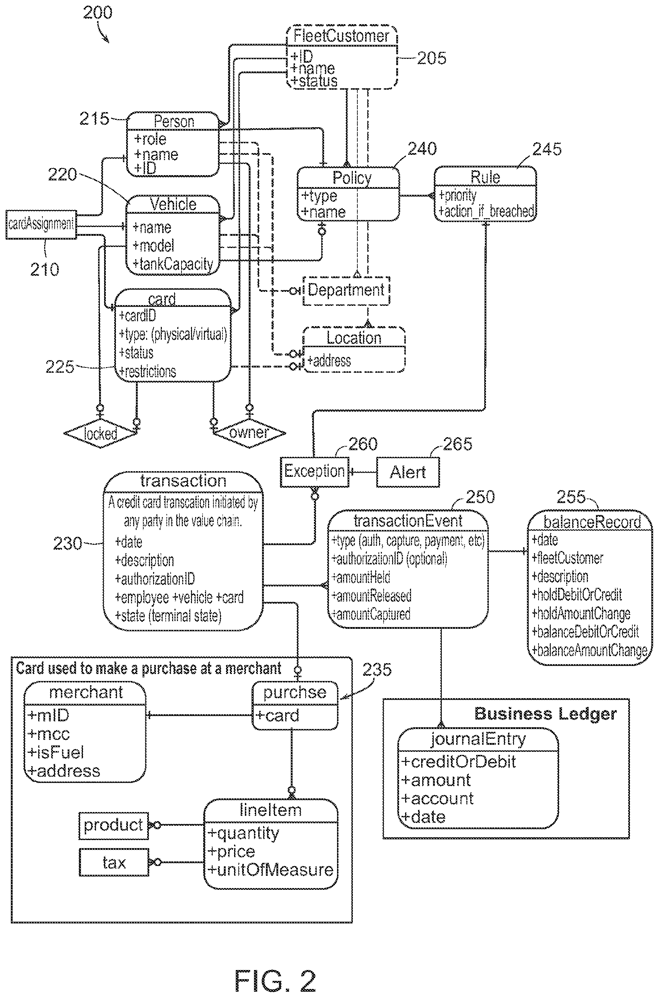

FIG. 2 is a diagram illustrating an exemplary embodiment of a data architecture 200 of an authorization request and management system according to subject matter described herein. The data architecture 200 can be implemented as computer-readable, executable code and can be stored in a memory of the authorization request and management system described herein. The data architecture 200 can include modules or collections of code, such as applications, configured to perform operations and functions associated with the authorization request and management system on one or more computing devices of the authorization request and management system described herein. In some embodiments, the data architecture 200 can be implemented in an object-oriented programming language and can include objects and object properties, although implementations in other programming languages are possible without limit.

As shown in FIG. 2, the architecture 200 includes a fleet customer object 205. The fleet customer object 205 can correspond to a customer of the authorization request and management system described herein, such as a vehicle fleet management company or the like. The fleet customer object 205 can include properties for a unique identifier, a name of the customer, and a status of the customer.

A cardAssignment object 210 can be used to manage the triad associative relationship between people, vehicles, and payment instruments, such as a credit cards. A person object 215 can include properties associated with a person or employee's role, name, and a unique ID for the person. A vehicle object 220 can include properties associated with a vehicle, such as a vehicle ID, a name of the vehicle, a model of the vehicle, a tank capacity of the vehicle, in addition to other similar attributes associated with the vehicle. A card object 225 can include properties associated with a card ID, a type of card (e.g., is the card a physical card or a virtual card), a status of the card, a policy of the card, a pre-authorization status of the card, and any restrictions or rules that may be configured in regard to the card. In some embodiments, a vehicle and a card can be locked. In some embodiments, a card can have an owner. The cardAssignment object 210 can be used to access the person object 215, the vehicle object 220, and the card object 225 so that associations between the three entities can be formed and stored in the authorization request and management system described herein. A temporal relationship can be formed between the entities and time stamps can be applied to events, such as transactions, that occur in regard to one or more of the entities such as the vehicle, the car, or the person. As shown in FIG. 2, people, vehicles, and cards can be associated with locations that can include addresses and people and vehicles can be associated with departments of the customer, e.g., the fleet customer object 205.

The authorization request and management system described herein can be configured to enable different types of assignment relationships that can be assigned in different manners. For example, a triad assignment relationship can be configured and can include relationships between a card, a user (e.g., an employee or driver), and an asset (e.g., a vehicle) to one another. In some embodiments, a dyad assignment relationship can be configured and can include relationships between a card and a user, or between a card and an asset. In some embodiments, assignment relationships can be dynamically configured or automatically configured based on one or more aspects of the card, the asset, or the user. In some embodiments, assignment relationships can be locked such that they cannot be changed after instantiated. In some embodiments, assignment relationships can be configured to automatically be removed (or to become invalid) at a particular time of day or in regard to a particular transaction type. In some embodiments, any one of a user, a card, or an asset can be locked in relation to any one of a corresponding user, card, or asset, respectively. In some embodiments, a card, a user, and an asset can be locked in association with one another. In some embodiments, when a payment instrument is locked in association with an asset and a user is authorized for the payment instrument, the user can be locked into association with the asset. In some embodiments, a payment instrument can be locked so that a user cannot be associated or authorized to use the payment instrument. In some embodiments, payment instruments can be configured such that an assignment relationship is not required in order for the payment instrument to be used.

A transaction object 230 can be created any time a transaction event occurs. A transaction event can include, for example, an employee using a payment instrument, such as a credit card, to refuel a vehicle. In some embodiments, a transaction can include an out-of-policy transaction, which may be an exception to transactions typically permitted by a particular policy. The transaction object 230 can include properties such as a date of the transaction, a description of the transaction, an authorization ID, as well as any of the employee, vehicle, and card associated with the transaction. The transaction object 230 can also include a state of the transaction or of the terminal at which the transaction is being conducted, such as an AFD.

Additional data 235 can be received by the authorization request and management system in regard to the transaction and based on the card ID. For example the additional data 235 can include the card used to perform the purchase, merchant data such as a merchant ID, a confirmation that the purchase is a fuel purchase, and an address of the merchant. The additional data 235 can also include line item data associated with the purchase, such as a description of the fuel product, a total cost of the fuel, an amount of the fuel taxes, a quantity of fuel product that was purchased, price, and a unit of measure of the purchased product and its price per unit of measure. In some embodiments, the additional data 235 can include data associated with operating the vehicle that may not be fuel related, such as parking fees, garage fees, roadway tolls, parking ticket or traffic violation fees, maintenance or repair labor costs, roadside assistance fees, or costs associated with vehicle parts, equipment, or components necessary to maintain or repair the vehicle. In some embodiments, the additional data 235 can include information about non-fuel related items purchased by the employee, such as costs of food, or other items or services. The additional data 235 can provide additional context for use with the authorization request and management system. In some embodiments, the cardID that is received by the authorization request and management system can be in a tokenized form. In some embodiments, the additional data 235 can be provided at a later time than the initial authorization data that is received for approving or declining the use of the card for the transaction. In some embodiments, the additional data 235 can be received in batch updates that are provided hours or days after the initial authorization data is received. The additional data 235 can be added to the transaction object 230 to build a more comprehensive view of a transaction.

When the card number is received from the merchant, the authorization request and management system can fetch the cardAssignment object 210 to be saved with the transaction object 230. The cardAssignment object 210 can be used to determine data about the person and vehicle, from the person object 215 and the vehicle object 220. Data about the person and the vehicle that are associated with the transaction can be evaluated using the policy object 240.

The policy object 240 can include properties associated with types of policies and names of policies. A policy can include one or more rules, which can be included in a rule object 245. The rule object 245 can include properties associated with a priority and an action to occur if the rule is breached or broken. The rules are used to approve or decline transactions by employees for a given vehicle and/or card. A rule can be a description of an evaluation that can be applied to a transaction. When an authorization request is received a rule associated with a policy can be applied in regard to the transaction. If a rule is broken an exception is identified and can be added to a list of exceptions 260. Alerts 265 can be generated based on the exceptions and the alert can identify the rule and/or the policy. Rules can be applied to any update of the authorization request and management system, such as when an initial authorization request is received as well as when additional data 235 is received.

In some embodiments, one or more policies can be configured with respect to a user, an asset, or a payment instrument, such as a credit card. Thus, any of a user, an asset, or a card can be associated with a policy. A policy can be configured according to one or more policy types. For example, a hard policy type can implement a policy configuration requiring strict adherence of the authorization request in regard to a particular authorization request workflow. In another example, a soft policy type can implement a policy configuration permitting more flexible adherence of the authorization request in regard to a particular authorization workflow.

For example, a soft policy can allow a first violation and the system can provide a warning to the user. Subsequently, the policy can dynamically apply a hard block disallowing further use of the payment instrument in subsequent attempts. This example may be relevant when a user required to supply a vehicle odometer reading prior to purchasing fuel is allowed a single fueling before the policy is altered, which may be necessary in areas with limited to no cellular data connectivity.

In another soft policy example, the policy may warn the user and request verification of an erroneous odometer reading. If an accurate odometer reading is not subsequently provided, the authorization request will be denied. In another example, the soft policy may allow an exception but may flag the transaction for review by an administrator rather than blocking the transaction entirely.

In some embodiments, a first portion of an authorization request workflow can include a hard policy type, and a second portion of the authorization request workflow can include a soft policy type, or vice versa.

As transaction data is received from merchants (both the initial authorization request and the receipt of the additional data 235), a transaction event object 250 is updated. The transaction event object 250 can be configured as an event log that can be updated in time as additional context or data regarding the transaction is received. For example, the transaction event object 250 can include properties for types of transactions such as an authorization, a capture, a payment, or the like. The transaction event object can also include properties associated with an authorization ID, an amount of funds held, an amount of funds released, and an amount of funds captured. Events can include sub-events that can be tied to a parent event. For example, a parent event of refueling a vehicle can include sub-events such as swiping a card, approving a transaction, pumping gas and returning the nozzle to the AFD, settling the transaction, and/or possibly a refund of a certain amount.

As transaction events are logged in the transaction event object 250, updates are made to a balance record object 255 and to journal entry object 260. The balance record object 255 can receive updates to determine a balance of funds for each customer's account in the authorization request and management system. The balance record object 255 can include properties associated with dates of transactions or transaction events, a customer ID, a description of the transaction or transaction event, the amount of change to the held balance, the direction of change to the held balance (credit or debit), the amount of change to the captured balance, and the direction of change to the captured balance (credit or debit). Balance record data can identify amounts of funds that are held, captured, and released in regard to a transaction.

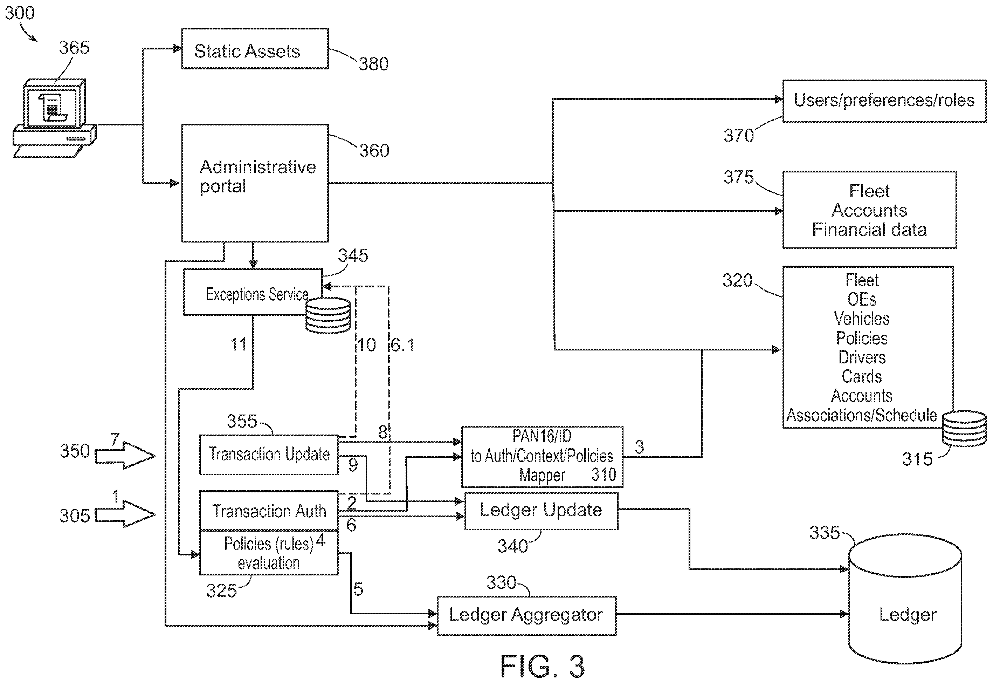

FIG. 3 is a diagram illustrating an exemplary embodiment of a data flow of the authorization request and management system herein using the exemplary data architecture of FIG. 2 according to subject matter described herein. The boxes shown and described in relation to FIG. 3 can include computer-readable, executable code which can perform operations and functions as described herein.

As shown in FIG. 3, at step 1, an authorization request 305 can be received by the authorization request and management system 300 described herein. The authorization request 305 can be received when a transaction is being initiated, such as fueling a vehicle using a company payment instrument, such as a credit card. The authorization request 305 can include a merchant ID, a transaction amount, and a card ID. The authorization request and management system 300 parses the card ID token to determine the card being used.

At step 2, the authorization request 305 is provided to a context mapping module or API 310 used to determine the associations of the card to people and policies. The context mapping module 310 communicates at step 3 with a database 315 including data 320 associated with a customer, a card, an account and to fetch secondary data such as any applicable policies or transactions.

At step 4, the authorization request 305 is evaluated by a policy evaluator module 325 to determine any rules and/or policies which may be applicable to the card or the transaction.

At step 5, the policy evaluator module 325 can query a ledger aggregator 330 for an aggregated state of relevant financial transactions (i.e. transactions that are associated with entities such as a driver, vehicle, fleet, or the like) so that the transaction balances can be used to evaluate spending limits. The transaction data can be stored in the ledger database 335. The ledger aggregator 330 can act as a cache to assist rapid determination of authorization request 305 approval.

At step 6, the policy evaluator module 325 can determine whether the authorization request 305 should be declined or approved, and provides this decision to the ledger update module 340 so that the transaction and its authorization decision are stored in the ledger database 335. A decision to decline can act as a hard block on the transaction. Simultaneously the authorization request and management system 300 can send the transaction details and context to the exception service module 345 at step 6.1. The exception service module 345 can make a request to the policy evaluator module 325 at step 11 to evaluate a broader rule set which can be used to generate exceptions that act as soft blocks and which may not cause an authorization request 305 to be declined, but which could be provided to a fleet owner or manager in an administrative portal on a client computing device as indications of card abuse or theft. For example, an odometer reading may not be provided and a fleet management user can be alerted that such data was not provided with the transaction or authorization request.

At step 7, transaction update data 350 is received by a transaction update module 350. The transaction update data 350 can correspond to the additional data 235 described in relation to FIG. 2. The transaction update data 35 can be tied to the initial authorization request 305 via an authorization ID that is common between the initial authorization request 305 and the additional data 235 and/or the transaction update data 350, as well as the context of the authorization request 305 can be determined.

At step 8, the transaction update module 355 can query the context mapping module 310 for additional details related to the transaction. This may include data, such as information about the payment instrument or credit card, the asset or employee assigned to the card, policy information about the asset and the employee, as well as secondary information about purchase restrictions for a fleet or any applicable overrides.

At step 9, the additional details can be provided to the ledger update module 340 to update the transaction.

At step 10, all data related to the transaction can be provided to an exception service module 345.

At step 11, the exception service module 345 can query the policy evaluator module 325 to generate any applicable exceptions.

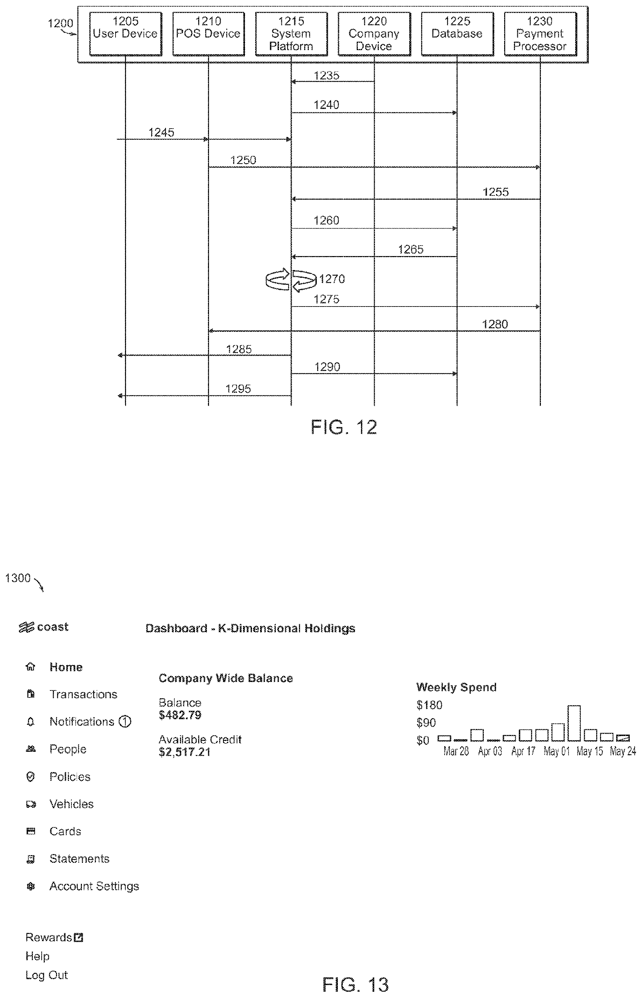

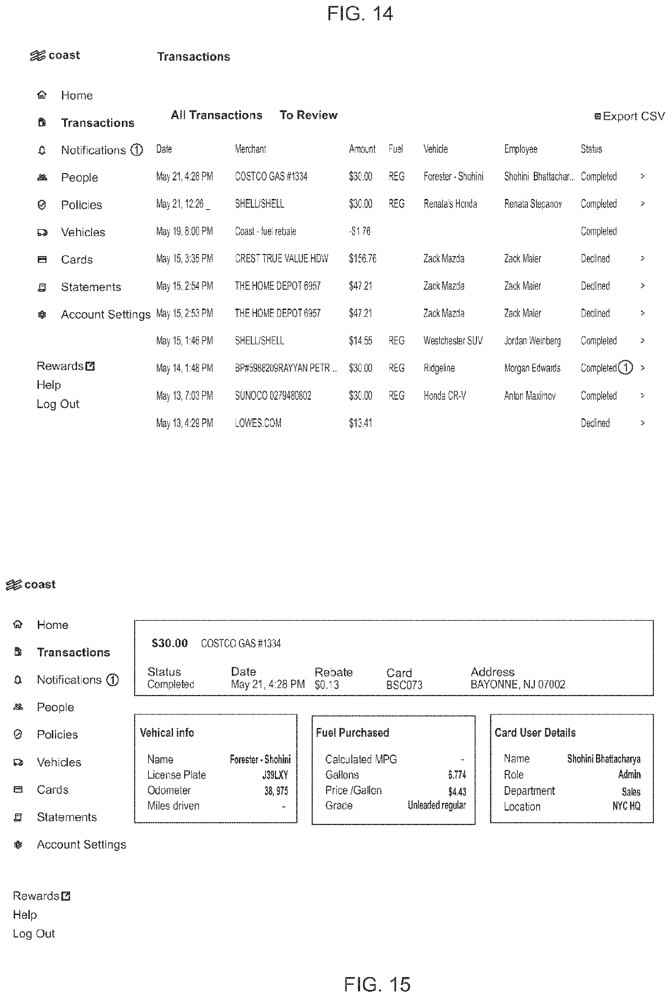

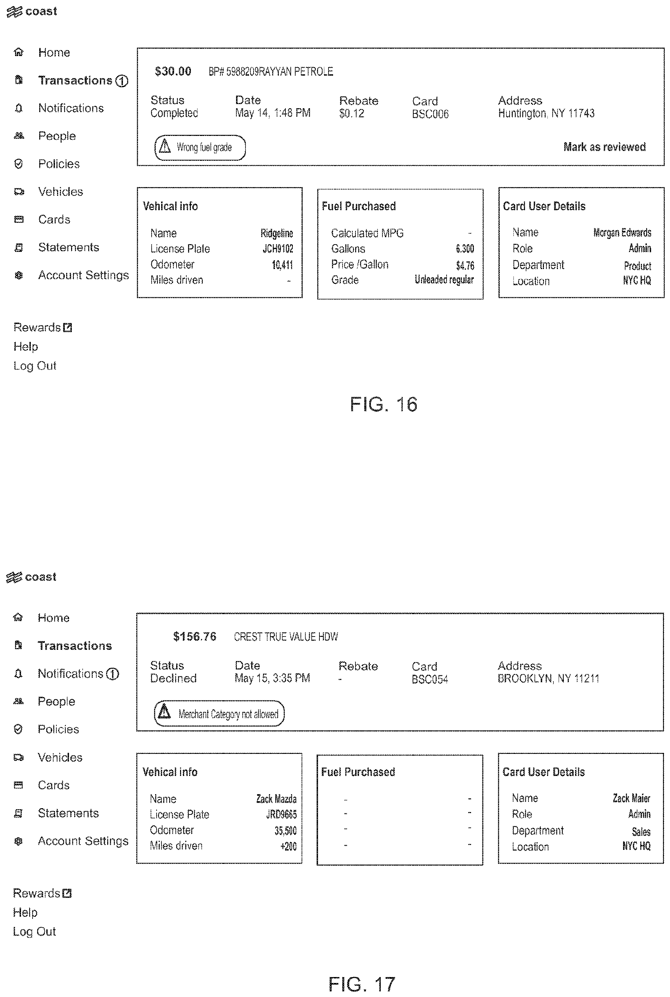

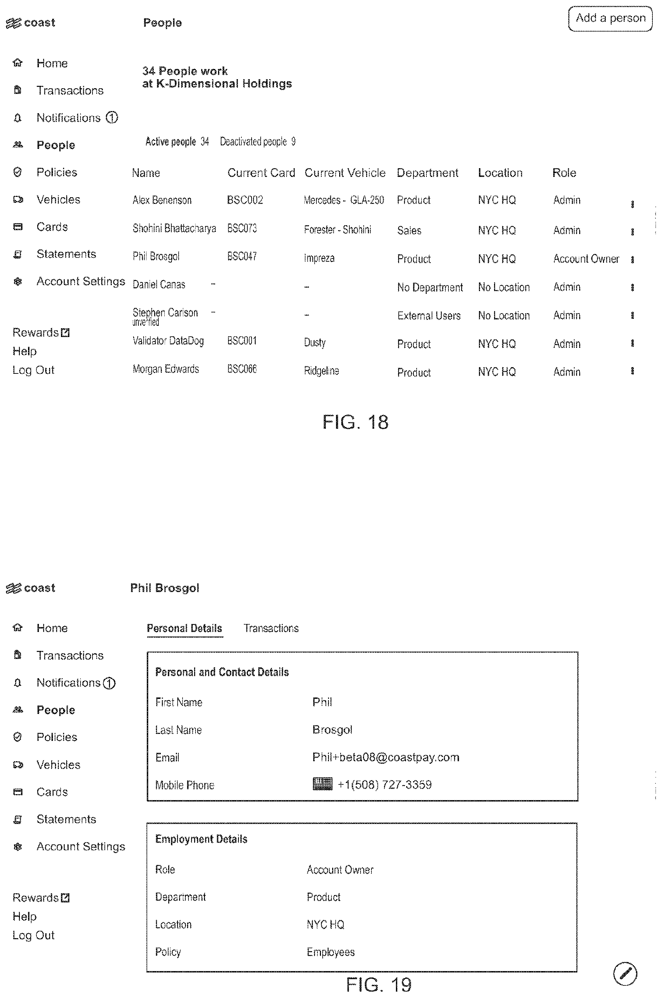

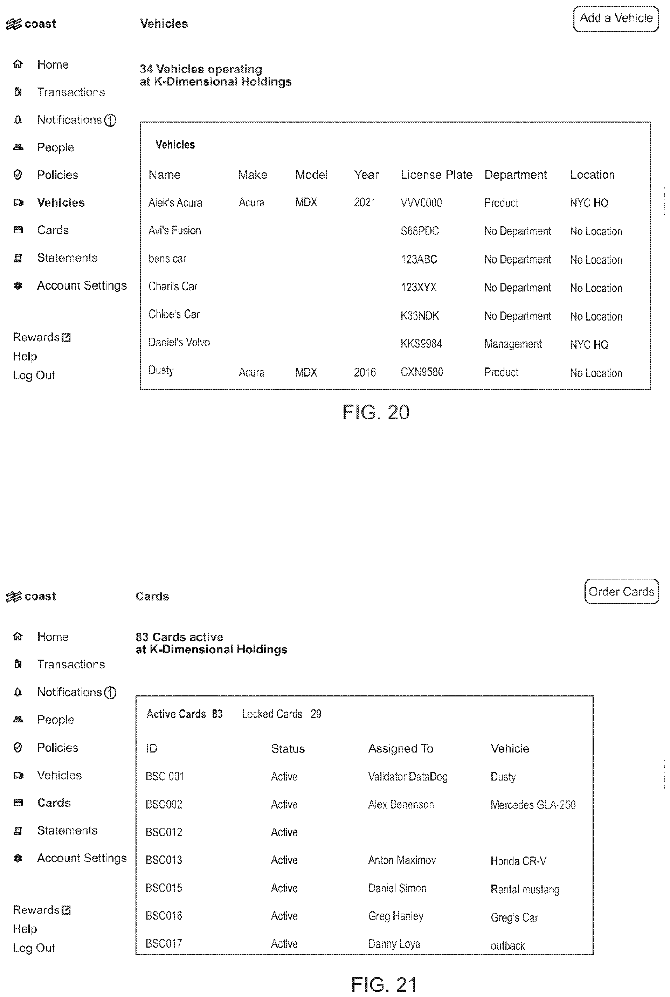

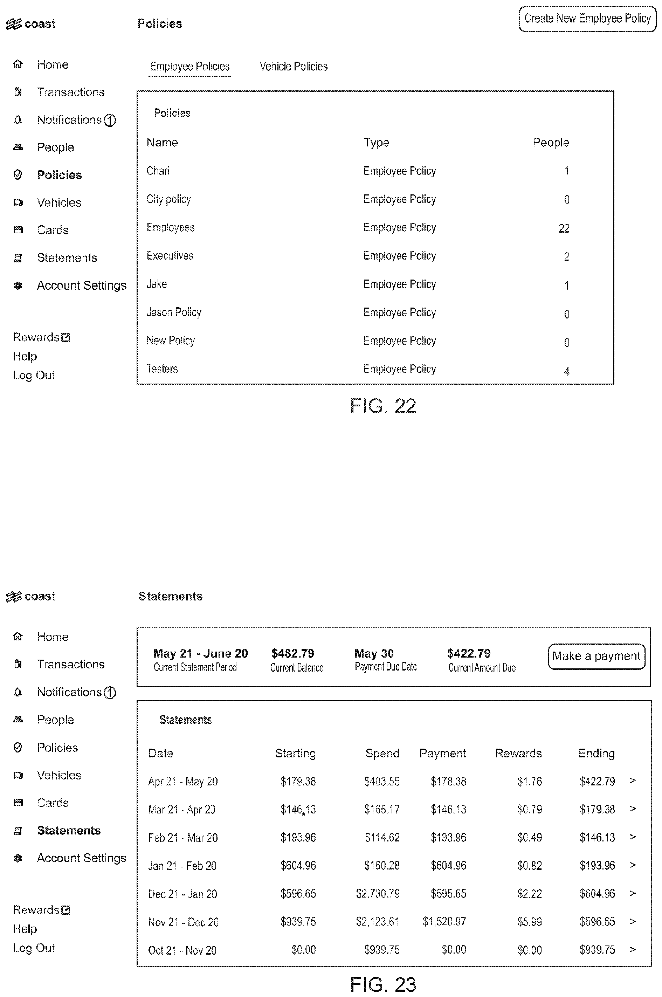

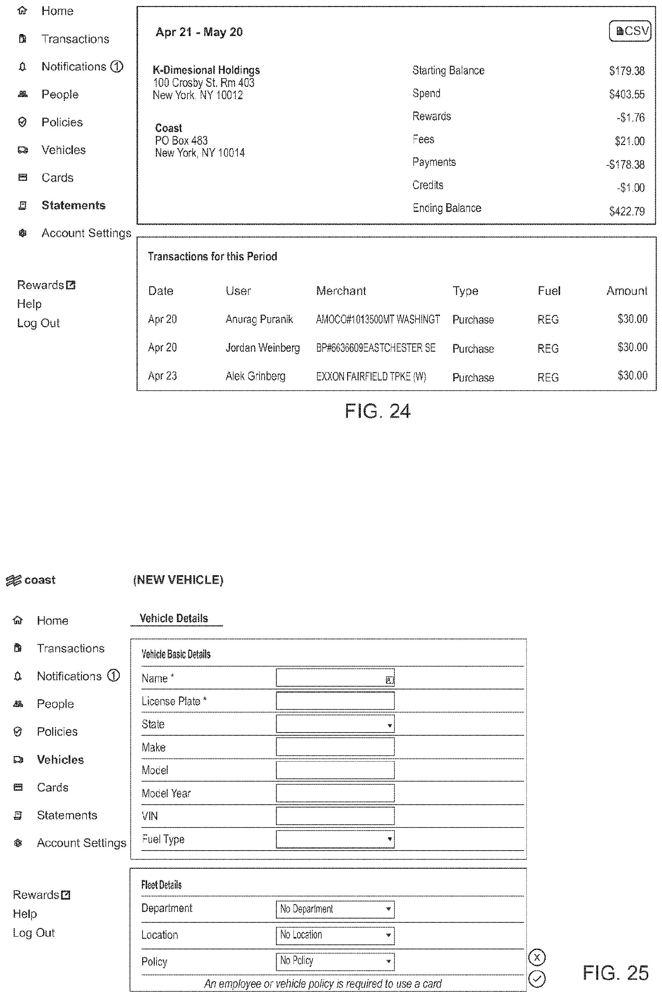

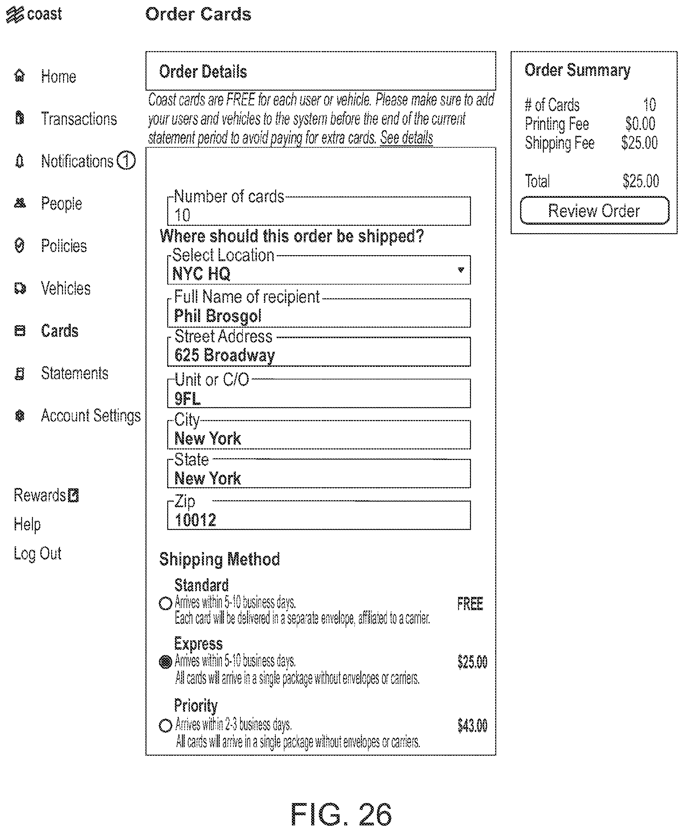

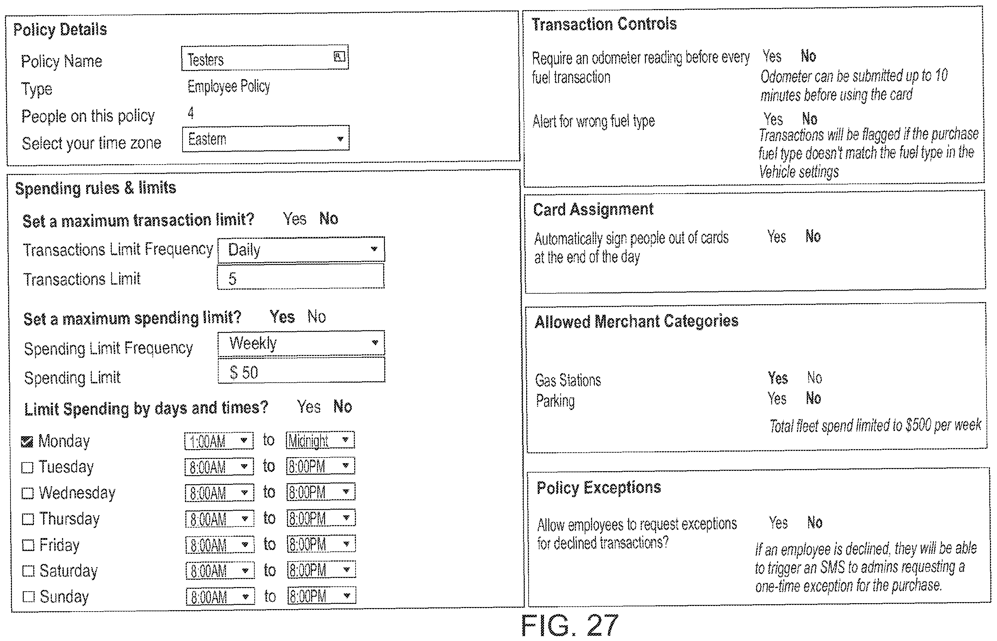

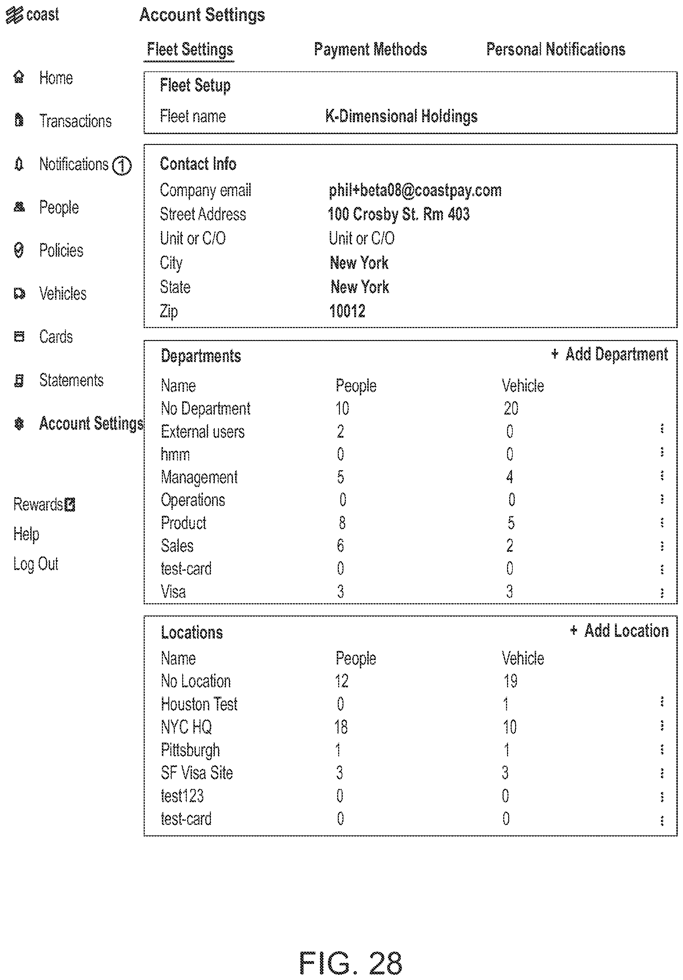

As further shown in FIG. 3, an administrative portal 360, e.g., an administrative portal provided via a client computing device 365, can be an entry point for customers of the authorization request and management system 300 described herein. The administrative portal 360 can provide one or more visualization tools therein related to authorization workflows, configuration settings, reporting, or the like. A fleet owner or manager can access a web application or a client application 360 provided via the client computing device 365 to view user data 370 associated with named users, user preferences, and user roles. FIG. 13 illustrates an interface 1300 of an example administrative portal with dashboard showing a company-wide balance and visual illustrating historical weekly spend. The example administrative portal interface 1300 can allow for inspection of information related to an account, such as all transactions (FIG. 14), transaction details (FIG. 15, 16, and 17), people associated with the account (FIG. 18 and 19), vehicles associated with an account (FIG. 20), payment instructions associated with an account (FIG. 21), policies associated with an account (FIG. 22), and statements associates with an account (FIG. 23 and 24). The example administrative portal with dashboard 1300 can allow for a user to add a vehicle (FIG. 25), order cards (FIG. 26), edit a policy (FIG. 27), and review fleet settings (FIG. 28).

Referring again to FIG. 3, in some embodiments, the administrative portal 360 can be configured to generate notifications about policy violations triggered by the policies configured via the administrative portal 360. In some embodiments, the notifications can be provided and reviewed in a violation review workflow using the administrative portal 360. In some embodiments, the administrative portal 360 can include functionality to allow pre-authorization of future transactions which may be performed by a specific user/employee to allow the user/employee to make one-time, exception-based, purchases or transactions outside of defined policy rule settings.

The administrative portal 360 can also provide access to financial data 375, such as accounts and other financial data associated with a fleet of vehicles. In some embodiments, the administrative portal 360 can also be configured to access and provide information associated with a fleet of vehicles, original equipment, individual vehicles, policies, drivers or employees, card, accounts, and associations or schedules of the fleet as shown in 320. In some embodiments, the administrative portal 360 can include a dashboard-like user interface. In some embodiments, the client computing device 365 can also include static asset 380. The static assets 380 can include image files, html files, javascript files, and cascading style sheet (CSS) files used to allow client customization of client-side portions of the authorization request and management system 300.

In some embodiments, the data architecture of FIG. 2 and/or the data flow of FIG. 3 can be configured to provide state management and contextual awareness for a user, a credit card, an asset, and/or for a transaction within an authorization workflow as described herein. For example, a first state can be associated with a particular card and a second state can be associated with a vehicle. In some embodiments, a state can refer to a locked or unlocked state of a card or an active or inactive state of a user or an asset. A state, such as a locked card state or an inactive asset state, can be applied to any of the three objects in an assignment and transactions associated with any of those elements of the assignment will not be authorized. In another example, a state can include a pre-authorization state that can be mapped to a user or an asset such that if either one is assigned to a payment instrument, such as a card, that card can be used to make a purchase that falls outside of its spend policy. Additionally, an auto-approve state can include a payment instrument to be automatically approved for all transactions regardless of the card's assignment to a user, asset, or associated spend policy.

The authorization request and management system 300 can include one or more features for managing state context and dialogues associated with states. In some embodiments, a user send a text message to query the status of their current payment instrument or card assignment, as well as their current spending policy restrictions.

In some embodiments, authorization requests can be managed and visualized using one or more workflows. For example, an authorization request can be managed with regard to a first workflow associated with a first policy, vehicle/asset, card, or authorization requestor. Workflows can be manipulated dynamically as an authorization request progresses. For example, an authorization request initiated in relation to a first workflow associated with a first policy can be branched, or altered, so as to implement a second workflow associated with a second policy after one or more events associated with the first workflow. In some embodiments, the administrative portal 360 can provide workflows as a visualization of connected nodes. Each node can represent an action or a state associated with an authorization request.

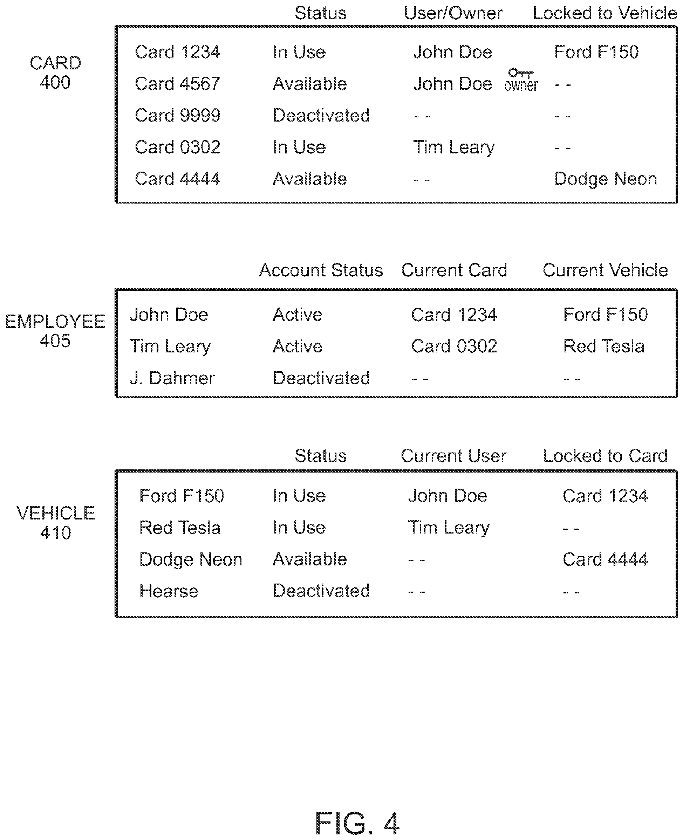

FIGS. 4-8 are images illustrating exemplary embodiments of user interfaces of the authorization request and management system of FIG. 3 according to subject matter described herein. FIG. 4 is an image illustrating exemplary embodiments of user interfaces of the authorization request and management system described according to subject matter herein. As shown in FIG. 4, a card interface can include a table 400. The table 400 can include a list of cards. For each card, the table 400 can further provide the status of the card, the User/Owner of the card, and a vehicle the card is associated with. For example, as shown in card table 400, card 1234 is "In Use" and is associated with "John Doe". A card can have one or more statuses, such as "In Use", "Available", or "Deactivated". The card 1234 is further associated with or locked to a vehicle, 'Ford F150".

As further shown in FIG. 4, the authorization request and management system can also include an employee interface table 405. The table 405 can include a list of employees. Each employee can be further associated with an account status, such as "Active" or "Deactivated". Each employee can also be associated with a current card and a current vehicle. For example, "John Doe" has an "Active" account status and is currently associated with card "1234" and with vehicle "Ford F150".

As further shown in FIG. 4, the authorization request and management system can also include a vehicle interface table 410. The table 410 can include a list of vehicles. For each vehicle, it's status, currently associated user, and associated card can be provided. For example, the "Ford F150" vehicle is "In Use" and "John Doe" is the currently associated user. The card "1234" is associated with or locked to the "Ford F150" vehicle.

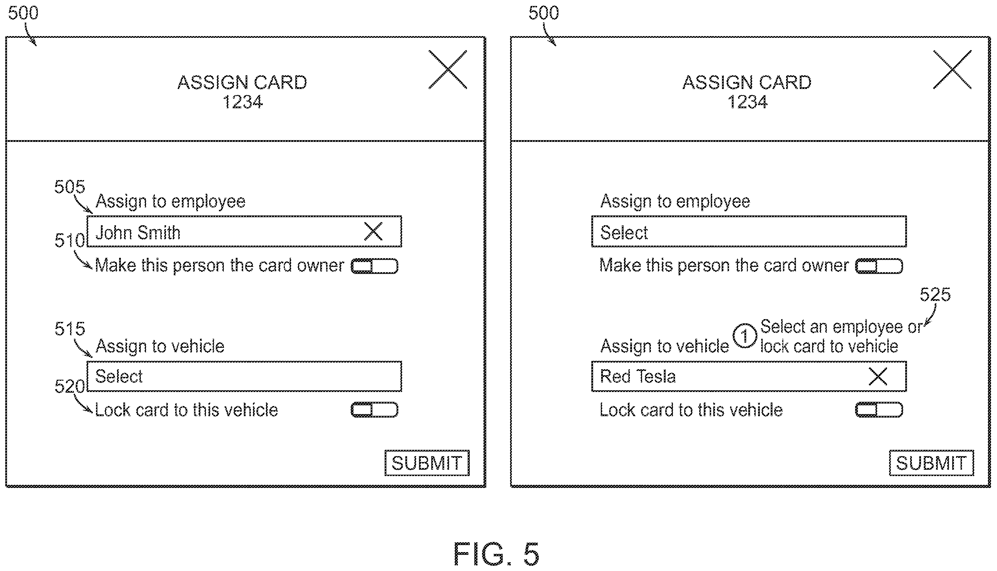

FIG. 5 is an image illustrating an exemplary embodiment of a card assignment user interface. As shown in FIG. 5, a card assignment interface 500 can be provided for a particular card to which an employee and a vehicle can be linked or associated. For example, the card assignment interface 500 can include an employee input 505. The card assignment interface 500 can provide a list of employees associated with the authorization request and management system and a user can select an employee to associate with a card. For example, "John Smith" has been assigned to card "1234". The card assignment interface 500 can include a card owner input 510. The card owner input 510 can identify the selected employee as the owner of the card "1234".

The card assignment interface 500 can also include a vehicle input 515. The vehicle input 515 can include a list of all vehicles associated with the authorization request and management system. In some embodiments, the list of vehicles may correspond to a fleet of vehicles. One or more fleets of vehicles may be supported by the authorization request and management system described herein. In some embodiments, only vehicles associated with the selected employee may be provided. The card assignment interface 500 also includes a card lock input 520. The card lock input 520 can identify the card "1234" as being locked for use only with the selected vehicle.

As shown in FIG. 5, the card assignment interface 500 can provide an alert 525 to a user that a card must be associated with an employee before associating the card to a selected vehicle. In some embodiments, the card can be locked to a vehicle without selecting an employee to associate the card with and the alert 525 can indicate such.

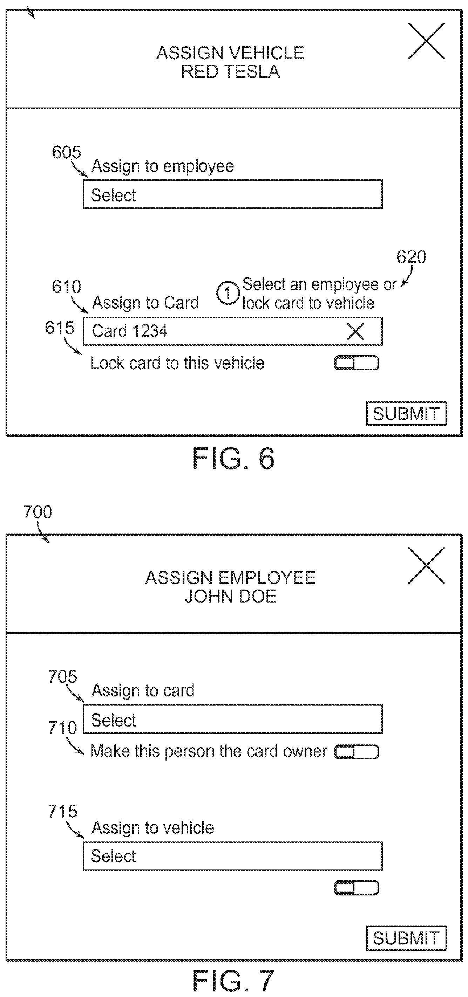

FIG. 6 is an image illustrating an exemplary embodiment of a vehicle assignment interface 600 of the authorization request and management system described according to subject matter herein. As shown in FIG. 6, the vehicle assignment interface 600 can include an employee input 605. The employee input 605 can be used to select an employee associated with a particular vehicle, such as the "Red Tesla" shown in FIG. 6.

The vehicle assignment interface 600 can also include a card input 610. The card input 610 can be used to assign or associate a particular card to a vehicle. For example, card "1234" can be assigned to the "Red Tesla" vehicle. The card lock input 610 can identify a card as being locked for use with the selected vehicle.

As shown in FIG. 6, the vehicle assignment interface 600 can provide an alert 620 to a user that a card must be associated with an employee before associating the card to a selected vehicle. In some embodiments, the card can be locked to a vehicle without selecting an employee to associate the card with and the alert 620 can indicate such.

FIG. 7 is an image illustrating an exemplary embodiment of an employee assignment interface 700 of the authorization request and management system described according to subject matter herein. As shown in FIG. 7, the employee assignment interface 700 can include a card input 705. The card input 705 can be used to select a card to be associated with a particular employee. The vehicle assignment interface 700 can also include a card owner input 710. The card owner input 710 can receive a selection identifying a selected card as being owned by a particular employee so that only that employee, and no other, can be associated with it.

The employee assignment interface 700 can also include a vehicle input 715. The vehicle input 715 can receive a selection identifying a vehicle that a particular employee is associated with.

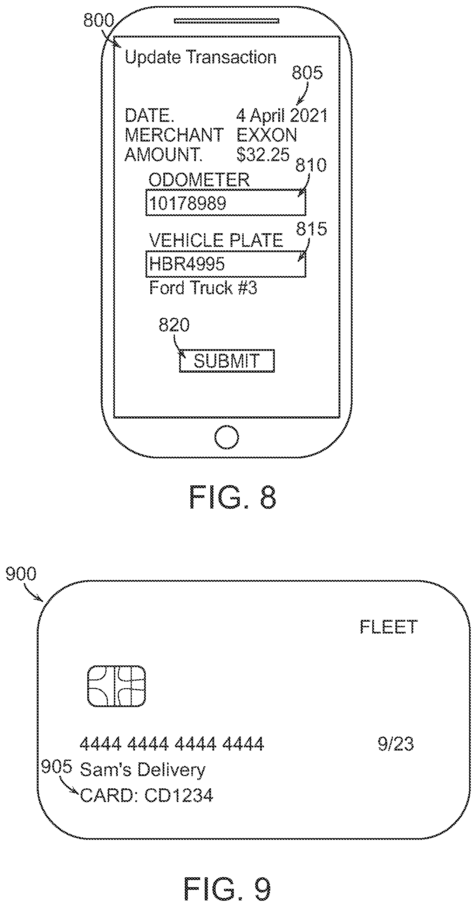

FIG. 8 is an image illustrating an exemplary embodiment of a user interface 800 of the authorization request and management system described according to subject matter herein. The user interface 800 can be provided to a user at the time of a transaction and can receive inputs for additional data to evaluate the transaction for exceptions after it has occurred. For example, the user interface 800 can include transaction data 805 indicating a date, merchant, and an amount of the transaction. The user interface 800 can include an odometer data input field 810 for the user to enter the current odometer reading of the vehicle. Odometer data can be used to calculate miles per gallon and notify the fleet owner or manager of potential vehicle abuse or fuel theft. The user interface 800 can also include a vehicle ID input field 815. The vehicle ID input field 815 can receive an input of a vehicle ID, such as the license plate of the vehicle. The user interface 800 can include a submit button 820. Upon providing an input to the submit button 820, the transaction data 805, the odometer data and the vehicle ID data can be provided to the policy evaluator module described herein.

FIG. 9 is an image illustrating an exemplary embodiment of a card for use with the authorization request and management system according to subject matter described herein. As shown in FIG. 9, a payment instrument, such as a credit card 900 can include a cardID 905. The cardID 905 can be printed on the card 900 at the time the card is manufactured. The cardID 905 can be stored in a database of the authorization request and management system described herein and associated with an individual or a vehicle.

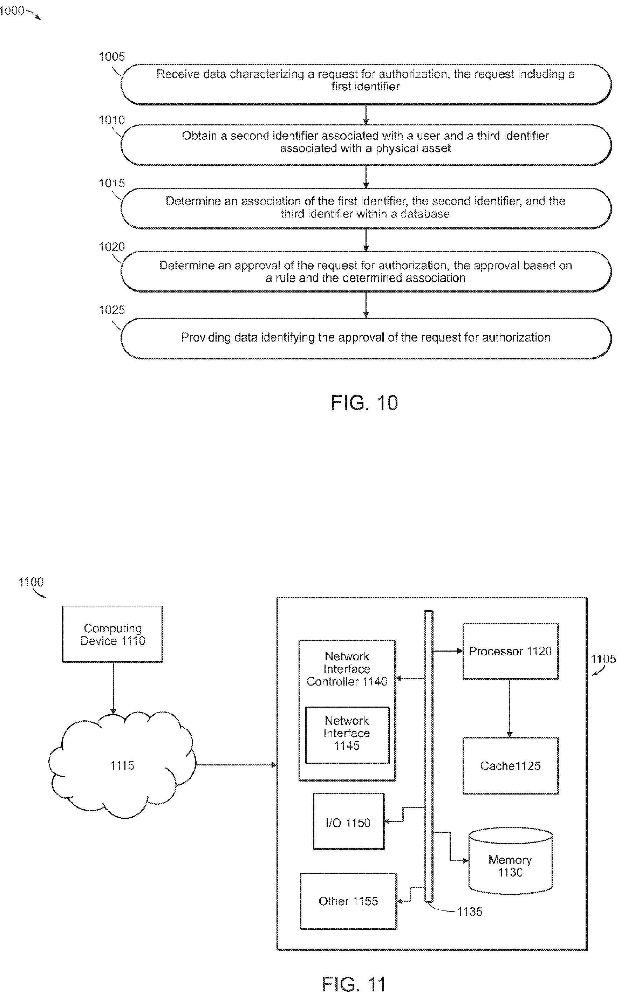

FIG. 10 is a process flow diagram of an exemplary process 1000 for approving an authorization request using the authorization request and management system according to subject matter described herein.

At 1005, data characterizing a request for authorization can be received. The request can include a first identifier identifying a payment instrument. In some embodiments, the first identifier can include a card ID associated with a payment instrument, such as a credit card, being used in a transaction. The authorization request can be received by the authorization request and management system described herein from a computing device coupled to the authorization request and management system via a network, such as a public or private network. In some embodiments, one or more networks can convey the authorization request. In some embodiments, at least one of the networks can include an open-loop credit card payment network or a closed-loop credit card payment network. In some embodiments, at least one of the credit card payment network can include a network associated with a financial payment processor.

At 1010, a second identifier associated with a user of the payment instrument and a third identifier associated with a physical asset can be obtained. In some embodiments, the second identifier can be stored in a memory or a database of the authorization request and management system described herein. In some embodiments, the user can be a user of a payment instrument, such as a credit card, associated with the first identifier. In some embodiments, the authorization request and management system can obtain the second and/or the third identifier based on inputs received from a user. In some embodiments, the physical asset can be a vehicle.

At 1015, the authorization request and management system described herein can determine that the first identifier, the second identifier, and the third identifier are associated within a database. The database can include assignment data describing an associative triad relationship between a first identifier associated with a payment instrument, such as a credit card, a second identifier associated with a user, and a third identifier associated with a vehicle. As described in relation to FIG. 1, a user can be associated with a card and with a vehicle. The association can be stored in a database of the authorization request and management system. In some embodiments, the authorization request and management system can look up one or more of the first, second, and/or third identifiers to determine associations between the identifiers. A triad relationship of the first, second, and third identifiers can be determined based on the look up.

At 1020, the authorization request and management system can determine an approval of the request for authorization. The approval can be based on a rule and the determined association. Having determined that the first, second, and third identifiers are associated, the authorization request and management system can further employ a rule to determine approval of the authorization. The rule can be stored in a database of the authorization request and management system and can be associated with or included in a policy that can be stored in and applied by the authorization request and management system. The rule can be user-configured and can include actions to be taken if conditions of the rule are not met. The rule can also include one or more alerts or notification mechanisms to be triggered in regard to an authorization request. In some embodiments, the rule can apply to any of the entities associated with the first, second, and/or third identifiers. As a result of passing conditions of the rule (and not triggering any exceptions to the rule), the authorization request and management system can determine to approve the authorization request. In some embodiments, exceptions can be hard exceptions and if triggered, the authorization system can decline the authorization request. In some embodiments, the exceptions can be soft exceptions and if triggered, the authorization request and management system can approve the authorization request.

At 1025, the authorization request and management system can provide data identifying the approval of the request for authorization. In some embodiments, the data can be transmitted to a point-of-sale device from which a transaction associated with the request for authorization was initiated. Approval of the authorization request can allow the transaction to be performed.

The authorization request and management system described herein can perform additional operations including, but not limited to, providing data regarding approved authorizations and subsequent transactions in reports, and generating various metrics regarding expenses, card use, asset use, or employee behavior. The authorization request and management system can provide user-configurable interfaces for report generation and presentation of user-defined metrics. In addition, the reports or metric data can include rule violation or exception data associated with existing or update policies.

FIG. 11 is a block diagram of a computing system 1100 suitable for use in implementing the computerized components of the authorization request and management system described herein. In broad overview, the authorization request and management system 1100 includes a server computing device 1105 coupled to at least one computing device 1110 via a network 1115. In some embodiments, multiple computing devices 1115 can be coupled via one or different networks to server computing device 1105. In some embodiments, the computing device 1110 can include an administrative portal or application configured to implement the user interfaces shown and described in relation to FIGS. 4-7 of the authorization request and management system 1100. In some embodiments, the computing device 1110 can include a personal computing device, such as a smartphone or mobile computing device, configured with an application providing a user interface as shown and described in FIG. 8 for submitting an authorization request to the authorization request and management system 1100.

The server computing device 1105 can include at least one processor 1120 for performing actions in accordance with instructions, and one or more memory devices 1125 and/or 1130 for storing instructions and data. The illustrated example server computing device 1105 includes one or more processors 1120 in communication, via a bus 1135, with memory 1130 and with at least one network interface controller 1140 with a network interface 1145 for connecting to external devices 1110, e.g., a client computing device (such as mobile phone, a smartphone, or the like). The one or more processors 1120 are also in communication, via the bus 1135, with each other and with any I/O devices at one or more I/O interfaces 1150, and any other devices 1155. The processor 1120 illustrated incorporates, or is directly connected to, cache memory 1125. Generally, a processor will execute instructions received from memory. In some embodiments, the server computing device 1105 can be configured within a cloud computing environment, a virtual or containerized computing environment, and/or a web-based microservices environment.

In more detail, the processor 1120 can be any logic circuitry that processes instructions, e.g., instructions fetched from the memory 1130 or cache 1125. In many embodiments, the processor 1120 is an embedded processor, a microprocessor unit or special purpose processor. The server computing device 1105 can be based on any processor, e.g., suitable digital signal processor (DSP), or set of processors, capable of operating as described herein. In some embodiments, the processor 1120 can be a single core or multi-core processor. In some embodiments, the processor 1120 can be composed of multiple processors.

The memory 1130 can be any device suitable for storing computer readable data. The memory 1130 can be a device with fixed storage or a device for reading removable storage media. Examples include all forms of non-volatile memory, media and memory devices, semiconductor memory devices (e.g., EPROM, EEPROM, SDRAM, flash memory devices, and all types of solid state memory), magnetic disks, and magneto optical disks. A server computing device 1105 can have any number of memory devices 1130.

The cache memory 1125 is generally a form of high-speed computer memory placed in close proximity to the processor 1120 for fast read/write times. In some implementations, the cache memory 1125 is part of, or on the same chip as, the processor 1120.

The network interface controller 1140 manages data exchanges via the network interface 1145. The network interface controller 1140 handles the physical and data link layers of the Open Systems Interconnect (OSI) model for network communication. In some implementations, some of the network interface controller's tasks are handled by the processor 1120. In some implementations, the network interface controller 1140 is part of the processor 1120. In some implementations, a server computing device 1105 has multiple network interface controllers 1140. In some implementations, the network interface 1145 is a connection point for a physical network link, e.g., an RJ 45 connector. In some implementations, the network interface controller 1140 supports wireless network connections and includes a network n interface 1145 configured as a wireless receiver/transmitter. Generally, a server computing device 1105 exchanges data with other computing devices 1110 via a network 1115 via physical or wireless links to a network interface 1145. In some implementations, the network interface controller 1140 implements a network protocol such as Ethernet, I2C, cellular data, and/or Bluetooth short-range wireless radio protocols.

The other computing devices 1110 can include a similar architecture and components (e.g., a data processor, a memory, a network interface controller, a display, and I/O components) as the server computing device 1105. The computing devices 1110 can be connected to the computing device 1110 via a network interface port 1145. The computing device 1110 can be a peer computing device, a network device, or any other computing device with network functionality. For example, a computing device 1110 can be configured as an administrative terminal or portal of the authorization request system 1100 described herein. In some embodiments, the computing device 1110 can include one or more client computing devices configured to submit one or more authorization requests to the server computing device 1105. In some embodiments, the computing device 1110 can be a network device such as a hub, a bridge, a switch, or a router, connecting the server computing device 1105 to a data network such as the Internet or a private third party data source or network.

In some uses, the I/O interface 1150 supports an input device and/or an output device (not shown). In some uses, the input device and the output device are integrated into the same hardware, e.g., as in a touch screen. In some uses, such as in a server context, there is no I/O interface 1150 or the I/O interface 1150 is not used. In some uses, additional other components 1155 are in communication with the server computer device 1105, e.g., external devices connected via a universal serial bus

(USB).

The other devices 1155 can include their own respective I/O interface, external serial device ports, memory, processors, and network interface components as described herein. For example, server computing device 1105 can include an interface (e.g., a universal serial bus (USB) interface, or the like) for connecting input devices 1155 (e.g., a keyboard, microphone, mouse, or other pointing device), output devices 1155 (e.g., video display, speaker, refreshable Braille terminal, or printer), or additional memory devices (e.g., portable flash drive or external media drive). In some implementations an I/O device is incorporated into the server computing device 1105 or the computing device 1110, e.g., a touch screen on a tablet device. In some implementations, a server computing device 1105 includes an additional device 1155 such as a co-processor, e.g., a math co-processor that can assist the processor 1120 with high precision or complex calculations.

FIG. 12 is a data flow diagram of an exemplary embodiment of data transmitted and received by the data architecture of FIG. 2 and the authorization request and management system described herein according to subject matter described herein. As shown in FIG. 12, the authorization request and management system 1200 can include a user device 1205, a point-of-sale device 1210, a system platform 1215, a company device 1220, a database 1225, and a payment processor 1230. In some embodiments, the system 1200 can include more or fewer components than those shown in FIG. 12.

Data 1235 identifying users, such as employees of a company, payment instruments, such as a credit cards or other financial transaction resources, and physical assets, such as vehicles can be provided to the system platform 1220 by a company device 1220. The data 1235 can also include policy data, such as rules, policy configuration data, or the like. The system platform 1220 can store data 1240, including but not limited to data 1235, to the database 1225.

A user of the user device 1205 can initiate a request for authorization 1245 at the point-of-sale device 1210, for example using a payment instrument, such as a credit card, to conduct a transaction at the point-of-sale device 1210. The request for authorization 1245 can be further transmitted to the system platform 1215. Additionally, the point-of-sale device 1210 can transmit a credit card authorization request 1250 to a payment processor 1230. The payment processor 1230 can include an open loop payment network or a closed loop payment network. The payment processor 1230 can request authorization 1255 to the system platform 1215 to confirm that the user is authorized to use the credit card.

An open loop payment network is associated with a payment card that can be used anywhere that the network brand of the card is accepted, which is nearly ubiquitous (e.g., Visa card work at effectively all credit card accepting merchants). Conversely, closed loop payment networks only work where the issuing financial institution directly enrolls specific merchants for participation in its card ecosystem, generally resulting in more limited acceptance (e.g., Diners Club cards only work at select restaurants and hotels that participate in the Diners Club network).

The system platform 1220 can verify the requested authorization 1255 by querying 1260 the database 1225. A result 1265 can be received by the system platform 1215. The result 1265 can include data associating with user with the credit card, and/or an asset, such as a vehicle. The system platform 1215 can further iteratively determine and apply one or more policies 1270 based on the result 1265. As a result of applying the one or more policies 1270, the system platform 1215 can determine to authorize (e.g., to approve) or to deny (e.g., to decline) the request for authorization. Based on the determination , the system platform 1215 can transmit the authorization/denial 1275 to the payment processor 1230. Once received, the payment processor 1230 can transmit an authorization/denial 1280 to the point-of-sale device 1210 to approve or decline the transaction.

The system platform 1215 can also transmit an authorization/denial 1285 to the user device 1205 informing the user of the approval or denial of the request for authorization to use the credit card for the transaction at the point-of-sale device 1210. The system platform 1215 can also generate alerts and/or transaction data 1290 that can be provided to the company device 1220. For example, upon approval of the request for authorization, the transaction data 1290 can include real-time transaction data associated with product or services purchased via the point-of-sale device 1210. In another example, if the request for authorization is denied, the system platform 1215 can generate alert data 1290 including transaction data associated with the attempted transaction.

Responsive to denial of a request for authorization, the system platform 1215 can provide subsequent data 1295 to the user device 1205. The subsequent data 1295 can include executable or non-executable content or instructions to further aid the user requesting authorization to perform a transaction using the credit card.

### Example Embodiments of the Authorization Request and Management System Described Herein

### 1. Driver - simple fuel purchase

John pulls into a gas station in their Ford F150. Taking the card out of their wallet, they look at the cardID printed on the card face and text the cardID ("CD1234") to a phone number associated with the authorization request and management system that is saved in their cell phone. They receive the response: "You have signed into card CD1234. Respond with a vehicle license plate to sign into a vehicle." They step outside of the car and text the license plate (HBR4995) to the same number and receive the response: "You have signed into vehicle Ford F150. You can use card CD1234 now!"

They swipe the card at the AFD and wait for the authorization to complete. While this happens, the authorization request and management system uses the card to look up the company account, available credit, and any spend restrictions that are applicable to the driver or vehicle. Finding no violations, the authorization request and management system approves the transaction and a second later the AFD shows the authorization is completed.

As the AFD prompts the driver to lift the pump handle and select a fuel grade, they receive a text saying: "Looks like you're buying fuel at Exxon Mobil Greenwich CT with card CD1234. Please reply with odometer reading for Ford F150." They finish buying gas and climb back into the car. Before they start the engine they receive a message: "Purchase $32.27 at Exxon Mobil Greenwich CT with card CD1234. If this wasn't you, reply "NO"." They start the engine so they can read the digital dashboard display and then text the odometer value (62450) to the authorization request and management system. They receive a response: "Confirmed odometer reading 62,450 for Ford F150. Reply "NO" to cancel." Having completed their purchase, they drive away. In the background, the authorization request and management system has logged that John made a purchase for $32.27 at Exxon for the company vehicle Ford F150. The odometer reading will be used to calculate the vehicle's MPG once the transaction settles and the authorization request and management system receives Level 2 and Level 3 data as specified by an open-loop payment network, such as Visa, from the merchant (gallons purchased and other line-item details).

### 2. Confused driver buys fuel while not signed into a vehicle

Carl pulls up to Exxon in his Sprinter Van and walks up to the AFD. He hasn't signed into a card associated with the authorization request and management system today, so when he swipes it, the authorization request and management system sees that there is no cardAssignment for that particular card, and declines the transaction. When the AFD tells him to try again, Carl smacks his forehead and signs into the card via the authorization request and management system. He ignores the text from the authorization request and management system prompting him to sign into a vehicle and swipes the card again. The authorization request and management system sees that Carl is assigned to the card, but that there is no vehicle assignment, and as it authorizes the purchase it sends the following text: "Looks like you're buying fuel at Exxon Mobil Greenwich CT with card CD1234. Please reply with a valid vehicle license plate."

Carl ignores this text as well and finishes pumping gas. Carl's manager has configured his spend policy to allow him a single fill-up without signing into a vehicle first, in case he's in an area with poor cell reception. After receiving a text confirming the merchant and purchase amount, Carl receives the following additional text: "Please note that according to your spend policy, further fuel purchases will be declined until you sign into a vehicle and provide an odometer reading."

When Carl, still having neglected to sign into a vehicle, attempts another fill-up later that day, the authorization request and management system declines the transaction.

### 3. Driver is declined for violating spend policy

On his way home from work, Frank decides to drive across town to visit a friend. After a few hours he heads home and sees that he's running low on fuel, and pulls into a gas station. Frank's spend policy is configured to only allow transactions when he is on his shift, between 8am and 5pm on weekdays. When he swipes his card, the authorization request and management system looks up his policy and determines that it is currently after-hours for Frank, and declines the authorization request. Within a few seconds he receives the following text: "Card CD1234 was declined due to policy: you are trying to use the card outside of the allowed time window."

### 4. Fraudulent use of a lost or stolen card

Abby unknowingly used her card (CD6666) at an AFD where a card skimmer was installed over the terminal. That afternoon, the person who installed the skimmer retrieves the card data on the device and uses it to print a card with the same magnetic track data. He takes the card to an old gas station that hasn't installed the newer chip readers, where the card will be accepted, and swipes it to fill up his truck.

The authorization request and management system receives an authorization request for card CD6666 and sees that Abby is signed into it and using vehicle Ford Fiesta. Everything about the transaction seems fine so it is authorized, and the stolen gas purchase is completed. Within seconds, Abby receives a text message: "Purchase $32.27 at CHEVRON KA with card CD6666. Red Tesla odometer is 12,432. If this wasn't you, reply "NO"."

Abby checks her wallet and sees the card is still there. Confused, she responds with "NO." Moments later she receives the reply: "You are signed out of card CD6666. Please contact your fleet manager if you suspect this was a fraudulent transaction." Subsequent attempts to use the card by the skimmer are declined, because nobody is signed in. Abby notifies her fleet manager and he gives her a replacement to use from his stack of spare cards. He also files a dispute over the fraudulent transaction and deactivates the card as lost or stolen.

### 5. An employee buys gas for their personal vehicle

Sam is supposed to be filling up his company's moving truck. While doing so, his friend Tim asks for Sam to put some gas into Tim's personal car. When Sam is prompted for the odometer reading via his authorized cell phone, he replies with the accurate truck odometer reading and adds 100 miles, thinking that should cover the difference.

Two days later, once the transaction settles and the authorization request and management system receives Level 2 and Level 3 data that includes the number of gallons purchased, the authorization request and management system's algorithms determine that a) the amount of fuel purchased is significantly higher than the average fuel purchase amount for that vehicle and b) the amount of fuel purchased is greater than the tank capacity of the moving truck's make and model. The authorization request and management system generates two exceptions and attaches them to the transaction for review.

When the fleet manager logs into the administrative portal, she sees a notification indicating there are transactions that require her attention. When she reviews the transaction list, she sees Sam's transaction from two days earlier has two issues flagged for review. She also sees that the subsequent fuel purchase for the same vehicle, made by another driver, is flagged for having an abnormally low MPG. After questioning both drivers, she determines that Sam has abused the system and takes appropriate disciplinary measures.

### 6. Out of Policy Purchase Exception/Pre-Authorization

A card that is associated with an employee and a vehicle can include a cardID identifying a spend policy. The spend policy can include a user-configurable setting permitting pre-authorization requests for transactions performed with the card. When the card has been declined the employee can receive an SMS message providing information explaining the reason the transaction was declined. For example, the transaction may have been declined due to exceeding a spend limit, exceeding a daily transaction amount, attempting to use the card at a specific time of day, or attempting to use the card at an unapproved location or merchant. The SMS message can further include a reply prompt for the employee to request pre-authorization of the transaction outside of the default spend policy that is associated with the card. For example, the prompt can include "Reply 'REQUEST' to request pre-authorization from an administrator for this purchase."

The employee can reply via SMS with the prompted information, e.g., "REQUEST," and can receive a confirmation that their request is being processed. The request will be provided to administrators for approval along with additional information of the transaction, such as but not limited to, employee name, vehicle name, purchase amount, vendor name, vendor location, or the like. The additional information provided to the administrators can also include a reason the transaction was declined. The additional information can also include executable content, such as a universal resource locator (URL), that the administrator can execute to authorize or decline the pre-authorization request.

The executable content can provide an administrator with data about the pre-authorization request that is optimized for mobile computing devices. The request can include an expiration period and can expire at the end of the expiration period. In some embodiments, the request can expire if no action is taken by an administrator within an expiration period. The administrator can approve (e.g., authorize) or decline the request and based on the administrator's disposition of the request an update notification can be provided via SMS to the employee and to administrators.

Upon receiving authorization approval, the employee can repeat the originally attempted transaction and the subsequent transaction will be approved. The transaction data associated with the subsequent transaction will also include data associated with the pre-authorization, such as the administrator who approved the pre-authorization request, when it was approved, a rationale for approval, or the like. The transaction data can be stored in an administrator portal of the authorization request and management system described herein. If the employee does not execute the subsequent transaction within a predetermined time period (e.g., 12 hours or 24 hours) after receiving the pre-authorization request approval, the approval will expire and the employee will need to initiate a new pre-authorization request approval.

Although the above pre-authorization request approval process is described in the context of a declined transaction, an employee could request pre-authorization approval at any time by providing via SMS a request code (e.g., "REQUEST REPAIR $100) or submitting data necessary for pre-authorization request approval via a sequence of pre-configured SMS dialog messages. The dialog messages can be configured to prompt and receive pertinent transaction information for an administrator to approve or decline the pre-authorization request approval via the authorization request and management system described herein. Although the authorization request approval process is described herein in the context of SMS message passing, additional formats or associative techniques can be envisioned. For example, in some embodiments, a card can be associated with a QR code that can be scanned and transmitted to the authorization request and management system via a mobile computing device in possession of the employee. In some embodiments, a code associated with the card can be generated via a mobile application configured on the employees mobile computing device. For example, the code can include a universal resource locator (URL), which when executed by the employee on the mobile computing device, associates a card with the employee.

Although a few variations have been described in detail above, other modifications or additions are possible. For example, in some embodiments, users could sign into the card and vehicle by sending photos of the card/vehicle license plate/odometer in the dash of the vehicle.

In some embodiments, users could sign in by means of a mobile web app or native mobile app, into which they authenticate with a username and password or other identity authentication just once and thereafter can control which card/vehicle they are using by means of a simple user interface.

In some embodiments, an unverified employee can be verified and assigned to a card and/or a vehicle dynamically using a phone number of an SMS-messaging enabled phone of the unverified employee. A manager or administrator can enter the employee's phone number into the authorization request and management system described herein, for example in the administrative portal 360, and an SMS message can be transmitted to the employee's phone. The employee can follow the prompts provided in the SMS message to reply to the authorization request and management system. For example, the prompts may instruct the employee to provide the license plate number or vehicle identification number (VIN) of the vehicle. Once the data is received and confirmed by the authorization request and management system, the employee can be verified and can be assigned to a card associated with the vehicle and/or the vehicle.

In some embodiments, users could sign in by means of RFID stickers attached to cards/vehicles and proximity-scanned by their phone.

In some embodiments, users could sign in using QR code stickers attached to cards/vehicles and captured by their phone.

In some embodiments, integration with providers of vehicle telematics devices can allow the real-time capture of information like vehicle location, velocity, fuel/odometer readings, and route info. This information, when married with transaction context, can allow for implementation of more complex spend controls and more refined ways to detect fraud/abuse. For example, comparing current vehicle location to current merchant location will allow detection of stolen cards. Comparing vehicle route and/or associated miles driven against gallons of fuel purchased will detect gas used to fill personal vehicles.

In some embodiments, implementing additional support for custom AFD prompts can allow alternative methods of creating the card/driver/vehicle association, or to authenticate drivers by having them enter their phone number or secret PIN.

Current authorization systems allow you to change policies from time to time but do not allow you to determine which policy to apply based on who is using the card and/or which asset is checked into the card.

Although a few variations have been described in detail above, other modifications or additions are possible. For example, some implementations of the current subject matter need not be limited to a payment instrument, but can be used with any other non-payment instrument or tool. For example, some implementation can include programming or using a vehicle charger instead of a payment card such that a charger-user-vehicle association paradigm is utilized instead of the above-described card-user-vehicle approach. Such an implementation need not involve payment at all.

The subject matter described herein provides many technical advantages. For example, some implementations of the authorization request and management system described herein can provide user-configurable rules and policies for use in determining approval for transactions when an associative relationship exists between a user, a credit card, and a physical asset. Some implementations of the authorization request and management system can improve security and reduce abuse associated with fraudulent credit card usage by providing an easy-to-use platform for both credit card users and entities for which the credit cards and physical assets are owned and operated. Some implementations of the authorization request and management system described herein can provide rapid initial approval of transaction authorizations, while simultaneously and/or subsequently determining additional transaction context useful for managing costs, credit card use, employee behavior, and asset usage. Some implementations of the authorization request and management system described herein can provide intuitive user interfaces for assigning or associating people to credit cards and to physical assets.

One or more aspects or features of the subject matter described herein can be realized in digital electronic circuitry, integrated circuitry, specially designed application specific integrated circuits (ASICs), field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software applications, applications, components, or code, include machine instructions for a programmable processor, and can be implemented in a high-level procedural language, an object-oriented programming language, a functional programming language, a logical programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions in a non-transitory way, such as for example as would a non-transient solid-state memory or a magnetic hard drive or any equivalent storage medium. The machine-readable medium can alternatively or additionally store such machine instructions in a transient manner, such as for example as would a processor cache or other random access memory associated with one or more physical processor cores.

To provide for interaction with a user, one or more aspects or features of the subject matter described herein can be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including acoustic, speech, or tactile input. Other possible input devices include touch screens or other touch-sensitive devices such as single or multi-point resistive or capacitive trackpads, voice recognition hardware and software, optical scanners, optical pointers, digital image capture devices and associated interpretation software, and the like.

In the descriptions above and in the claims, phrases such as "at least one of' or "one or more of' may occur followed by a conjunctive list of elements or features. The term "and/or" may also occur in a list of two or more elements or features. Unless otherwise implicitly or explicitly contradicted by the context in which it is used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." In addition, use of the term "based on," above and in the claims is intended to mean, "based at least in part on," such that an unrecited feature or element is also permissible.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and sub-combinations of the disclosed features and/or combinations and sub-combinations of several further features disclosed above. In addition, the logic flows depicted in the accompanying figures and/or described herein do not necessarily require the particular order shown, or sequential order, to achieve desirable results. Other implementations may be within the scope of the following claims.

## Claims

1. A method comprising:
receiving data characterizing a request for authorization, the request including a first identifier identifying a payment instrument;
obtaining a second identifier and a third identifier, the second identifier identifying a user of the payment instrument and the third identifier identifying a physical asset, wherein the second identifier is obtained from a database;
using the database, the database including assignment data describing an associative triad relationship between the first identifier, the second identifier, and the third identifier, determining an association between the first identifier, the second identifier, and the third identifier;
determining, based on a comparison of the association to a rule stored in the database, to approve the request for authorization; and
transmitting data to approve the request for authorization.

2. The method of claim 1, further comprising providing, via SMS or a mobile application, the user with input prompts to receive the user's authorization credentials for using the payment instrument,
and/or
wherein determining to approve the request for authorization is performed based on one or more policies, each policy including one or more rules and being dynamically modifiable, optionally wherein the one or more rules are evaluated based on information obtained from a third party.

3. The method of any one of the preceding claims, wherein the approved request for authorization is supplemented with additional data received after transmitting the data to approve the request for authorization, the additional data comprising data associated with operating the physical asset.

4. The method of any one of the preceding claims:
wherein the data characterizing the request for authorization is received from and transmitted to an open loop payment network or a closed loop payment network; and/or
the method further comprises receiving data characterizing a second request and determining to decline the second request.

5. The method of any one of the preceding claims, wherein the physical asset is a petroleum fueled vehicle, an electric vehicle, a construction equipment, or real estate.

6. The method of claim 5, wherein the authorization is for one of fueling the petroleum fueled vehicle via a petroleum fuel dispensing station, charging the electric vehicle via an electric vehicle charging station, paying for expenses related to operating the construction machinery, or paying for real estate expenses.

7. A system comprising:
a data processor and a memory storing computer-executable instructions, which when executed by the data processor cause the data processor to perform operations comprising:
receiving data characterizing a request for authorization from a first computing device communicatively coupled to the at least one data processor, the request including a first identifier identifying a payment instrument;
obtaining a second identifier and a third identifier, the second identifier identifying a user of the payment instrument and the third identifier identifying a physical asset, wherein the second identifier is obtained from a database;
using the database, the database including assignment data describing an associative triad relationship between the first identifier, the second identifier, and the third identifier, determining an association between the first identifier, the second identifier, and the third identifier;
determining, based on a rule and the association, to approve the request for authorization; and
transmitting data to approve the request for authorization to the first computing device.

8. The system of claim 7, wherein the instructions cause the data processor to perform operations further comprising:
providing, via SMS or a mobile application, the user with input prompts to receive the user's authorization credentials for using the payment instrument.

9. The system of claims 7 or 8, wherein:
determining to approve the request for authorization is performed based on one or more policies, each policy including one or more rules and being dynamically modifiable, optionally wherein the one or more rules are evaluated based on information obtained from a third party; and/or
the approved request for authorization is supplemented with additional data received after transmitting the data to approve the request for authorization, the additional data comprising data associated with operating the physical asset; and/or
the data characterizing the request for authorization is received from and transmitted to an open loop payment network or a closed loop payment network.

10. The system of any one of claims 7 to 9, wherein the instructions further cause the data processor to perform operations comprising receiving data characterizing a second request from the first computing device and determining to decline the second request.

11. The system of any one of claims 7 to 10, wherein:
the physical asset is a vehicle petroleum fueled vehicle, an electric vehicle, a construction equipment or real estate, optionally wherein the authorization is for fueling or charging the vehicle, paying for vehicle-related expenses, paying for expenses related to operating the construction machinery, or paying for real estate expenses.

12. The system of any one of claims 7 to 11, wherein:
i) the user of the payment instrument is an employee of a company attempting a transaction at a point-of-sale device using the payment instrument, and the data processor is communicatively coupled to an administrative portal associated with the company, optionally wherein the data characterizing the request for authorization is received in response to the employee presenting the payment instrument during the transaction for purchasing a product related to the physical asset, and wherein transmitting the data to approve the request for authorization authorizes the transaction at the point of sale device; and/or
ii) the payment instrument includes at least one of a locked state, an unlocked, and an auto-approved state, the user of the payment instrument can includes at least one of an active state, or an inactive state, and the physical asset can includes at least one of an active state, or an inactive state;
and optionally wherein the administrative portal can be configured to manage a plurality of states associated with the transaction, the plurality of states including one or more of the states associated with the payment instrument, the user of the payment instrument, and the physical asset.

13. The system of any one of claims 9 to 12, wherein a policy included in the one or more policies includes at least one state included in the plurality of states associated with the transaction.

14. The system of any one of claims 7 to 13, wherein the data received characterizing the request for authorization is received in response to scanning a QR code using the first computing device, or wherein the data received characterizing the request for authorization is received via an SMS message or via an application configured on the first computing device.

15. A non-transitory computer readable medium storing:
computer-executable instructions,
a database including a rule and assignment data describing an associative triad relationship between a payment instrument, a user of the payment instrument, and a physical asset;
the computer-executable instructions when executed at least one data processor forming part of at least one computing system, cause the at least one data processor to perform operations comprising:
receiving data characterizing a request for authorization, the request including a first identifier identifying the payment instrument;
obtaining a second identifier and a third identifier, the second identifier identifying the user of the payment instrument and the third identifier identifying the physical asset, wherein the second identifier is obtained from the database;
using the database, determining an association between at least two of the first identifier, the second identifier, or the third identifier;
determining, based on a rule and the association, to approve the request for authorization; and
transmitting data to approve the request for authorization.

## Patentansprüche

1. Verfahren, umfassend:
Empfangen von Daten, die eine Autorisierungsanfrage kennzeichnen, wobei die Anfrage eine erste Kennung enthält, die ein Zahlungsinstrument identifiziert;
Erhalten einer zweiten Kennung und einer dritten Kennung, wobei die zweite Kennung einen Nutzer des Zahlungsinstruments identifiziert und die dritte Kennung einen physischen Vermögenswert identifiziert, wobei die zweite Kennung aus einer Datenbank erhalten wird;
unter Verwendung der Datenbank, wobei die Datenbank Zuordnungsdaten enthält, die eine assoziative Dreierbeziehung zwischen der ersten Kennung, der zweiten Kennung und der dritten Kennung beschreiben, Bestimmen einer Verbindung zwischen der ersten Kennung, der zweiten Kennung und der dritten Kennung;
Bestimmen, basierend auf einem Vergleich der Verbindung mit einer in der Datenbank gespeicherten Regel, die Autorisierungsanfrage zu genehmigen; und
Übertragen von Daten zur Genehmigung der Autorisierungsanfrage.

2. Verfahren nach Anspruch 1, ferner umfassend das Bereitstellen von Eingabeaufforderungen über SMS oder eine mobile Anwendung für den Nutzer, um die Autorisierungsinformationen des Nutzers für die Nutzung des Zahlungsinstruments zu empfangen,
und/oder
wobei das Bestimmen, die Autorisierungsanfrage zu genehmigen, basierend auf einer oder mehreren Richtlinien ausgeführt wird, wobei jede Richtlinie eine oder mehrere Regeln umfasst und dynamisch veränderbar ist, wobei die einen oder mehreren Regeln optional basierend auf Informationen bewertet werden, die von einer dritten Partei erhalten werden.

3. Verfahren nach einem der vorstehenden Ansprüche, wobei die genehmigte Autorisierungsanfrage durch zusätzliche Daten ergänzt wird, die nach dem Übertragen der Daten zur Genehmigung der Autorisierungsanfrage empfangen werden, wobei die zusätzlichen Daten Daten umfassen, die mit dem Betrieb des physischen Vermögenswerts in Zusammenhang stehen.

4. Verfahren nach einem der vorstehenden Ansprüche:
wobei die Daten, die die Autorisierungsanfrage kennzeichnen, von einem offenen Zahlungsnetzwerk oder einem geschlossenen Zahlungsnetzwerk empfangen und an dieses übertragen werden; und/oder
wobei das Verfahren ferner das Empfangen von Daten, die eine zweite Anfrage kennzeichnen, und das Bestimmen, die zweite Anfrage abzulehnen, umfasst.

5. Verfahren nach einem der vorstehenden Ansprüche, wobei es sich bei dem physischen Vermögenswert um ein mit Erdöl betriebenes Fahrzeug, ein Elektrofahrzeug, eine Baumaschine oder eine Immobilie handelt.

6. Verfahren nach Anspruch 5, wobei die Autorisierung für eines der folgenden Elemente gilt: das Betanken des mit Erdöl betriebenen Fahrzeugs über eine Erdöl-Tankstelle, das Laden des Elektrofahrzeugs über eine Elektrofahrzeug-Ladestation, die Begleichung von Kosten im Zusammenhang mit dem Betrieb der Baumaschine oder die Begleichung von Immobilienausgaben.

7. System, umfassend:
einen Datenprozessor und einen Speicher, der computerausführbare Befehle speichert, die, wenn sie von dem Datenprozessor ausgeführt werden, den Datenprozessor veranlassen, Betriebe auszuführen, die Folgendes umfassen:
Empfangen von Daten, die eine Autorisierungsanfrage von einer ersten Rechenvorrichtung kennzeichnen, die kommunikativ mit dem mindestens einen Datenprozessor gekoppelt ist, wobei die Anfrage eine erste Kennung enthält, die ein Zahlungsinstrument identifiziert;
Erhalten einer zweiten Kennung und einer dritten Kennung, wobei die zweite Kennung einen Nutzer des Zahlungsinstruments identifiziert und die dritte Kennung einen physischen Vermögenswert identifiziert, wobei die zweite Kennung aus einer Datenbank erhalten wird;
unter Verwendung der Datenbank, wobei die Datenbank Zuordnungsdaten enthält, die eine assoziative Dreierbeziehung zwischen der ersten Kennung, der zweiten Kennung und der dritten Kennung beschreiben, Bestimmen einer Verbindung zwischen der ersten Kennung, der zweiten Kennung und der dritten Kennung;
Bestimmen, auf der Grundlage einer Regel und der Verbindung, die Autorisierungsanfrage zu genehmigen; und
Übertragen von Daten zur Genehmigung der Autorisierungsanfrage an die erste Rechenvorrichtung.

8. System nach Anspruch 7, wobei die Befehle den Datenprozessor veranlassen, Betriebe auszuführen, die ferner Folgendes umfassen:
Bereitstellen von Eingabeaufforderungen über SMS oder eine mobile Anwendung für den Nutzer, um die Autorisierungsinformationen des Nutzers für die Nutzung des Zahlungsinstruments zu empfangen.

9. System nach Anspruch 7 oder 8, wobei:
das Bestimmen, die Autorisierungsanfrage zu genehmigen, basierend auf einer oder mehreren Richtlinien ausgeführt wird, wobei jede Richtlinie eine oder mehrere Regeln umfasst und dynamisch veränderbar ist, wobei die einen oder mehreren Regeln optional basierend auf Informationen bewertet werden, die von einer dritten Partei erhalten werden; und/oder
die genehmigte Autorisierungsanfrage durch zusätzliche Daten ergänzt wird, die nach dem Übertragen der Daten zur Genehmigung der Autorisierungsanfrage empfangen werden, wobei die zusätzlichen Daten Daten umfassen, die mit dem Betrieb des physischen Vermögenswerts in Zusammenhang stehen; und/oder
die Daten, die die Autorisierungsanfrage kennzeichnen, von einem offenen Zahlungsnetzwerk oder einem geschlossenen Zahlungsnetzwerk empfangen und an dieses übertragen werden.

10. System nach einem der Ansprüche 7 bis 9, wobei die Befehle den Datenprozessor ferner veranlassen, Betriebe auszuführen, die das Empfangen von Daten, die eine zweite Anfrage kennzeichnen, von der ersten Rechenvorrichtung und das Bestimmen, die zweite Anfrage abzulehnen, umfassen.

11. System nach einem der Ansprüche 7 bis 10, wobei:
der physische Vermögenswert ein mit Erdöl betriebenes Fahrzeug, ein Elektrofahrzeug, eine Baumaschine oder eine Immobilie ist, wobei die Autorisierung optional für eines der folgenden Elemente gilt: das Betanken oder Aufladen des Fahrzeugs, die Begleichung von fahrzeugbezogenen Ausgaben, die Begleichung von Ausgaben im Zusammenhang mit dem Betrieb der Baumaschine oder die Begleichung von Immobilienausgaben.

12. System nach einem der Ansprüche 7 bis 11, wobei:
i) der Nutzer des Zahlungsinstruments ein Mitarbeiter eines Unternehmens ist, der versucht, eine Transaktion an einem Kassengerät unter Verwendung des Zahlungsinstruments durchzuführen, und der Datenprozessor kommunikativ mit einem dem Unternehmen zugeordneten Verwaltungsportal verbunden ist, wobei die Daten, die die Autorisierungsanfrage kennzeichnen, optional als Reaktion darauf empfangen werden, dass der Mitarbeiter das Zahlungsinstrument während der Transaktion zum Kauf eines Produkts im Zusammenhang mit dem physischen Vermögenswert vorlegt, und wobei das Übertragen der Daten zur Genehmigung der Autorisierungsanfrage die Transaktion am Kassengerät autorisiert; und/oder
ii) das Zahlungsinstrument mindestens einen der folgenden Zustände umfasst: einen gesperrten Zustand, einen entsperrten Zustand und einen automatisch genehmigten Zustand; der Nutzer des Zahlungsinstruments mindestens einen der folgenden Zustände aufweisen kann: einen aktiven Zustand oder einen inaktiven Zustand; und der physische Vermögenswert mindestens einen der folgenden Zustände umfassen kann: einen aktiven Zustand oder einen inaktiven Zustand;
und wobei das Verwaltungsportal optional so konfiguriert sein kann, dass es eine Vielzahl von Zuständen verwaltet, die mit der Transaktion verbunden sind, wobei die Vielzahl von Zuständen einen oder mehrere der Zustände umfasst, die mit dem Zahlungsinstrument, dem Nutzer des Zahlungsinstruments und dem physischen Vermögenswert verbunden sind.

13. System nach einem der Ansprüche 9 bis 12, wobei eine in der einen oder den mehreren Richtlinien enthaltene Richtlinie mindestens einen Zustand umfasst, der in der Vielzahl von Zuständen enthalten ist, die mit der Transaktion verbunden sind.

14. System nach einem der Ansprüche 7 bis 13, wobei die empfangenen Daten, die die Autorisierungsanfrage kennzeichnen, als Reaktion auf das Scannen eines QR-Codes unter Verwendung der ersten Rechenvorrichtung empfangen werden, oder wobei die empfangenen Daten, die die Autorisierungsanfrage kennzeichnen, über eine SMS-Nachricht oder über eine auf der ersten Rechenvorrichtung konfigurierte Anwendung empfangen werden.

15. Nicht-flüchtiges, computerlesbares Medium, das Folgendes speichert:
computerausführbare Befehle,
eine Datenbank, die Regel- und Zuordnungsdaten enthält, welche eine assoziative Dreierbeziehung zwischen einem Zahlungsinstrument, einem Nutzer des Zahlungsinstruments und einem physischen Vermögenswert beschreiben;
wobei die computerausführbaren Befehle, wenn sie auf mindestens einem Datenprozessor ausgeführt werden, der Teil mindestens eines Computersystems ist, bewirken, dass der mindestens eine Datenprozessor Betriebe ausführt, die Folgendes umfassen:
Empfangen von Daten, die eine Autorisierungsanfrage kennzeichnen, wobei die Anfrage eine erste Kennung enthält, die das Zahlungsinstrument identifiziert;
Erhalten einer zweiten Kennung und einer dritten Kennung, wobei die zweite Kennung den Nutzer des Zahlungsinstruments identifiziert und die dritte Kennung den physischen Vermögenswert identifiziert, wobei die zweite Kennung aus der Datenbank erhalten wird;
unter Verwendung der Datenbank, Bestimmen einer Verbindung zwischen mindestens zwei der folgenden Elemente: der ersten Kennung, der zweiten Kennung oder der dritten Kennung;
Bestimmen, basierend auf einer Regel und der Verbindung, die Autorisierungsanfrage zu genehmigen; und
Übertragen von Daten zur Genehmigung der Autorisierungsanfrage.

## Revendications

1. Procédé comprenant :
la réception de données caractérisant une demande d'autorisation, ladite demande comprenant un premier identifiant servant à identifier un moyen de paiement,
l'obtention d'un deuxième identifiant et d'un troisième identifiant, ledit deuxième identifiant servant à identifier un utilisateur du moyen de paiement et ledit troisième identifiant servant à identifier un actif physique, ledit deuxième identifiant étant obtenu à partir d'une base de données,
la détermination d'une association entre le premier identifiant, le deuxième identifiant et le troisième identifiant, à l'aide de la base de données, ladite base de données comprenant des données d'attribution décrivant une relation de triade associative entre le premier identifiant, le deuxième identifiant et le troisième identifiant,
la détermination, en fonction d'une comparaison de l'association à une règle stockée dans la base de données, de l'approbation de la demande d'autorisation, et
la transmission de données visant à approuver la demande d'autorisation.

2. Procédé selon la revendication 1, comprenant en outre la fourniture, à l'utilisateur, par le biais d'un SMS ou d'un application mobile, d'invites d'entrée visant à la réception des identifiants d'autorisation de l'utilisateur en vue de l'utilisation du moyen de paiement,
et/ou
dans lequel la détermination de l'approbation de la demande d'autorisation est effectuée en fonction d'une ou plusieurs politiques, chacune des politiques comprenant une ou plusieurs règles et étant dynamiquement modifiable, la ou les règles étant éventuellement évaluées en fonction d'informations obtenues à partir d'un tiers.

3. Procédé selon l'une quelconque des revendications précédentes, dans lequel la demande d'autorisation approuvée est complétée par des données supplémentaires reçues après la transmission des données visant à approuver la demande d'autorisation, les données supplémentaires comprenant des données associées au fonctionnement de l'actif physique.

4. Procédé selon l'une quelconque des revendications précédentes, dans lequel :
les données caractérisant la demande d'autorisation sont reçues en provenance d'un réseau de paiement en boucle ouverte ou d'un réseau de paiement en boucle fermée et transmises à celui-ci, et/ou
le procédé comprenant en outre la réception de données caractérisant une deuxième demande et la détermination d'un refus de la deuxième demande.

5. Procédé selon l'une quelconque des revendications précédentes, dans lequel l'actif physique est un véhicule fonctionnant au pétrole, un véhicule électrique, un appareil de chantier ou un bien immobilier.

6. Procédé selon la revendication 5, dans lequel l'autorisation concerne le ravitaillement du véhicule fonctionnant au pétrole dans une station de distribution de carburant pétrolier, la recharge du véhicule électrique dans une station de charge de véhicule électrique, le paiement de dépenses liées au fonctionnement de l'appareil de chantier, ou le paiement de dépenses immobilières.

7. Système comprenant :
un processeur de données et une mémoire dans laquelle sont stockées des instructions exécutables par ordinateur, qui, lorsqu'elles sont exécutées par le processeur de données, amènent le processeur de données à effectuer des opérations comprenant :
la réception de données caractérisant une demande d'autorisation à partir d'un premier dispositif informatique couplé avec faculté de communication au(x) processeur(s) de données, la demande comprenant un premier identifiant servant à identifier un moyen de paiement,
l'obtention d'un deuxième identifiant et d'un troisième identifiant, ledit deuxième identifiant servant à identifier un utilisateur du moyen de paiement et ledit troisième identifiant servant à identifier un actif physique, ledit deuxième identifiant étant obtenu à partir d'une base de données,
la détermination d'une association entre le premier identifiant, le deuxième identifiant et le troisième identifiant, à l'aide de la base de données, ladite base de données comprenant des données d'attribution décrivant une relation de triade associative entre le premier identifiant, le deuxième identifiant et le troisième identifiant,
la détermination, en fonction d'une règle et de ladite association, de l'approbation de la demande d'autorisation, et
la transmission de données visant à approuver la demande d'autorisation, auprès du premier dispositif.

8. Système selon la revendication 7, dans lequel les instructions amènent le processeur de données à effectuer des opérations comprenant en outre :
la fourniture, à l'utilisateur, par le biais d'un SMS ou d'un application mobile, d'invites d'entrée visant à la réception des identifiants d'autorisation de l'utilisateur en vue de l'utilisation du moyen de paiement.

9. Système selon la revendication 7 ou 8, dans lequel :
la détermination de l'approbation de la demande d'autorisation est effectuée en fonction d'une ou de plusieurs politiques, chacune des politiques comprenant une ou plusieurs règles et étant dynamiquement modifiable, la ou les règles étant éventuellement évaluées en fonction d'informations obtenues à partir d'un tiers, et/ou
la demande d'autorisation acceptée est complétée par des données supplémentaires reçues après la transmission des données visant à approuver la demande d'autorisation, les données supplémentaires comprenant des données associées au fonctionnement de l'actif physique,
et/ou
les données caractérisant la demande d'autorisation sont reçues en provenance d'un réseau de paiement en boucle ouverte ou d'un réseau de paiement en boucle fermée et transmises à celui-ci.

10. Système selon l'une quelconque des revendications 7 à 9, dans lequel les instructions amènent en outre le processeur de données à effectuer des opérations comprenant la réception de données caractérisant une deuxième demande en provenance du premier dispositif informatique et la détermination d'un refus de la deuxième demande.

11. Système selon l'une quelconque des revendications 7 à 10, dans lequel :
l'actif physique est un véhicule fonctionnant au pétrole, un véhicule électrique, un appareil de chantier ou un bien immobilier, l'autorisation concernant éventuellement le ravitaillement ou la recharge du véhicule, le paiement de dépenses liées au véhicule, le paiement de dépenses liées au fonctionnement de l'appareil de chantier ou le paiement de dépenses immobilières.

12. Système selon l'une quelconque des revendications 7 à 11, dans lequel :
i) l'utilisateur du moyen de paiement est un salarié d'une entreprise qui tente d'effectuer une transaction sur un terminal de point de vente à l'aide du moyen de paiement, et le processeur de données est couplé avec faculté de communication à un portail administratif associé à l'entreprise, les données caractérisant la demande d'autorisation étant éventuellement reçues en réaction au fait que l'employé présente le moyen de paiement lors de la transaction pour acheter un produit lié à l'actif physique, et la transmission des données visant à approuver la demande d'autorisation autorisant la transaction sur le terminal de point de vente, et/ou
ii) le moyen de paiement présente soit un état verrouillé, soit un état déverrouillé, soit un état automatiquement approuvé, l'utilisateur relié au moyen de paiement peut présenter soit un état actif, soit un état inactif, et l'actif physique peut présenter soit un état actif, soit un état inactif ;
le portail administratif pouvant éventuellement être conçu pour gérer la pluralité d'états associés à la transaction, la pluralité d'états comprenant un ou plusieurs états associés au moyen de paiement, à l'utilisateur du moyen de paiement et à l'actif physique.

13. Système selon l'une quelconque des revendications 9 à 12, dans lequel une politique comprise dans la ou les politiques présente au moins un état compris dans la pluralité d'états associés à la transaction.

14. Système selon l'une quelconque des revendications 7 à 13, dans lequel les données reçues caractérisant la demande d'autorisation sont reçues en réaction à la lecture d'un code QR à l'aide du premier dispositif informatique, ou les données reçues caractérisant la demande d'autorisation sont reçues par le biais d'un message SMS ou par le biais d'une application configurée sur le premier dispositif informatique.

15. Support lisible par ordinateur non transitoire sur lequel sont stockées :
des instructions exécutables par ordinateur,
une base de données comprenant une règle et des données d'attribution décrivant une relation de triade associative entre un moyen de paiement, un utilisateur du moyen de paiement et un actif physique ;
les instructions exécutables par ordinateur, lorsqu'elles sont exécutées par au moins un processeur de données faisant partie d'au moins un système informatique, amenant le ou les processeurs de données à effectuer des opérations comprenant :
la réception de données caractérisant une demande d'autorisation, ladite demande comprenant un premier identifiant servant à identifier le moyen de paiement,
l'obtention d'un deuxième identifiant et d'un troisième identifiant, ledit deuxième identifiant servant à identifier l'utilisateur du moyen de paiement et ledit troisième identifiant servant à identifier l'actif physique, ledit deuxième identifiant étant obtenu à partir de la base de données,
au moyen de la base de données, la détermination d'une association entre au moins deux identifiants parmi le premier identifiant, le deuxième identifiant et le troisième identifiant,
la détermination, en fonction d'une règle et de ladite association, de l'approbation de la demande d'autorisation, et
la transmission de données visant à approuver la demande d'autorisation.
